# EUROPEAN PATENT APPLICATION

(11) **EP 4 560 669 A1**
(43) Date of publication of application: **28.05.2025**
(21) Application number: 23843035.9
(22) Date of filing: 20.07.2023
(51) Int. Cl.: H01G 9/042, H01G 9/048, H01G 9/055, H01G 9/145, H01G 9/15

(54) **ELECTRODE MATERIAL, CATHODE FOIL FOR ELECTROLYTIC CAPACITOR, AND ELECTROLYTIC CAPACITOR**

(30) Priority: 21.07.2022 JP 2022116595; 14.07.2023 JP 2023116068
(71) Applicant: Japan Capacitor Industrial Co., Ltd., Tokyo 197-0013 (JP)
(72) Inventor: SHIMOYAMA Nami, Fussa-shi, Tokyo 197-0013 (JP); YOSHIOKA Koji, Fussa-shi, Tokyo 197-0013 (JP); SHIRATORI Tsubasa, Fussa-shi, Tokyo 197-0013 (JP); OTSUKA Masaya, Fussa-shi, Tokyo 197-0013 (JP)
(74) Representative: Zimmermann & Partner Patentanwälte mbB
(86) International application number: PCT/JP2023/026574
(87) International publication number: WO 2024/019112

(57) **Abstract**

An object of the present invention is providing an electrode material and the like which can be used in a cathode foil for an electrolytic capacitor and the like, having all the advantages of: having good adhesion with a solid electrolyte and thus low contact resistance at an interface; having a layer (geometric structure and surface modification) for retaining a solid electrolyte and an electrolytic solution; having an excellent deterioration resistance with respect to a solid electrolyte, an electrolytic solution and moisture; having no capacitive component or a low capacitive component and acting as a low-resistance conductor (exhibiting no or low synthetic capacitance); making it possible to be made thin; requiring low cost; and barely causing winding deviation. Provided is an electrode material having an oxide layer on a smooth base material, and further having an inorganic conductive layer on the oxide layer. The inorganic conductive layer has a metal-containing and/or a metal compound-containing first conductive layer, and a carbon-containing second conductive layer. The first conductive layer has an uneven portion on the surface layer side thereof, and the second conductive layer is positioned at the outermost layer of the inorganic conductive layer.

## Description

### Technical Field

The present invention relates to an electrode material, in particular to a cathode foil for an electrolytic capacitor, which can be used in electrolytic capacitors such as a solid electrolytic capacitor and a hybrid capacitor, as well as an electrolytic capacitor.

### Background Art

Examples of functions and properties required in cathodes of hybrid capacitors include:
(i) having an adhesion with a solid electrolyte and a low contact resistance at an interface,
(ii) having a layer (geometrical structure and surface modification) for retaining a solid electrolyte and an electrolytic solution,
(iii) having resistance to deterioration due to the solid electrolyte, a chemical polymerizing solution, an electrolytic solution and moisture,
(iv) having no capacitive component or a low capacitive component and acting as a low-resistance conductor;
(v) making it possible to be made thin; and
(vi) requiring low costs.

It can be said that, except for the compatibility with the electrolytic solution in the above (ii) and (iii), these are very important functions and properties also in cathodes for solid electrolytic capacitors.

In relation to this, for a foil provided with a smooth titanium layer on a smooth foil, and further a smooth carbon layer thereon, for example, the adhesion is insufficient with a dispersion of the solid electrolyte of (i) in which an aqueous solution in particular is used as a dispersion medium; the retentivity of the electrolytic solution of (ii) is also poor. Particularly for a solid electrolyte consisting of an electroconductive polymer, it becomes difficult to maintain a good-doped state, and it becomes highly resistant when made into an element. Size reduction of an etched and formed cathode foil is difficult because of its large thickness, hence when combining this with an anode to configure a capacitor, a synthetic capacitance is generated, which ends up lowering the capacitance acquisition rate of the anode. Moreover, there is a problem such that the ESR (Equivalent Series Resistance) is low on the high-frequency side for example of 100 kHz, while the ESR is remarkably high on the low frequency side for example of 120 Hz, resulting in a narrow frequency range for the low-ESR. A contact resistance with the solid electrolyte becomes large, and the portion not coated with the solid electrolyte is dependent on the electrolytic solution, and hence low temperature properties are also a concern. Furthermore, the cathode foil may also end up being subject to formation locally in the aging anodic oxidation step after element formation, and thus there is also concern of a decrease in capacitance and an increase in resistance. For example, a formation film layer provided to an aluminum base material has a certain protective function against the electrolytic solution. However, for a solid electrolyte consisting of an electroconductive polymer, it is difficult to completely suppress chemical reactions with an acidic electrolytic solution for maintaining a doped state of a chemical polymerizing solution and a solid electrolyte, as well as chemical reactions between a base material and slightly remaining moisture, for example. Moreover, on the other hand, if a natural oxide film and a formation film are in direct contact with the solid electrolyte in the state as-is, there is a problem such that a contact resistance ends up becoming high because a depletion layer is generated at the contact interface.

The thickness of an etched and formed foil provided with an intermediate layer (titanium layer) and a carbon layer is thin, and this foil can retain an electroconductive polymer and an electrolytic solution in an etched layer. However, it is difficult to completely coat the titanium layer and carbon layer provided on the etched layer all the way to the inside of the etched layer, and hence an aluminum oxide layer is necessary (for example, a formation film of approximately several voltages is necessary) to protect a foil from the electrolytic solution, solid electrolyte and chemical polymerizing solution. Although this formation film layer also has a function to protect a foil from the electrolytic solution similarly to that above, because it would act as an insulator as-is, it is highly likely to be a cause of high resistance. Most of these problems can be said to also apply to a solid electrolytic capacitor whose electrolyte consists solely of a solid electrolyte, with no electrolytic solution interposed.

A variety of conventional cathode foils used in electrolytic capacitors such as a solid electrolytic capacitor and a hybrid capacitor have been developed. Patent Literature 1 and Patent Literature 3 describe electrolytic capacitors with an inorganic-based conductive layer formed at the surface of a cathode foil roughened by etching (surface expansion rate of 1.5 to 500-fold). However, these cathode foils have problems such as the following.
· When using an etched base material whose smooth base material surface was expanded by etching, it is difficult for the substances of an inorganic-based conductive layer to go round into the inside of the etched layer, and is thus difficult to completely coat the inside of the etched layer with the substances of the inorganic-based conductive layer. Hence, portions would appear where aluminum, which is a component of the base material, is exposed.
· An aluminum oxide film is present on the exposed aluminum surface, and since aluminum oxide is an insulator, the surface becomes highly resistant.
· The exposed aluminum is weak in chemical resistance, and there is a problem in the durability against polymers and electrolytic solutions.
· Because the base material is dissolved by etching, there are also many problems in terms of handling strength and foil thinning, residual chlorine, waste liquid treatment and manufacturing costs.

Moreover, Patent Literature 4 describes a cathode foil for an aluminum electrolytic capacitor, characterized by: a first layer consisting of at least one kind of a metal, nitride thereof, carbide thereof, carbonitride thereof and oxide thereof formed on an aluminum foil surface; and a second layer consisting of at least one kind of a metal, nitride thereof, carbide thereof, carbonitride thereof and oxide thereof formed on the first layer, where the first layer has a denser structure than that of the second layer. However, the main purpose of the invention according to Patent Literature 4 is to improve the hydration resistance in a cathode for a capacitor which uses only a water-containing electrolytic solution as an electrolyte, and there is room for improvement for further low resistance and durability of a cathode which can be used in an electrolytic capacitor such as a hybrid capacitor and a solid electrolytic capacitor.

Patent Literature 2 describes a cathode foil for a hybrid capacitor using a smooth base material on which a carbon layer is formed. Moreover, Patent Literature 5 describes a cathode foil for a solid electrolytic capacitor which uses a smooth base material, where carbon is present on a metal layer. However, because there is no uneven portion on the surface layer side of these cathode foils, it is considered that there is room for further improvement in ESR and in durability. Moreover, because there is no uneven portion on the surface layer side of the cathode foil, the friction force with a separator paper (isolating paper) is weak, and during the extraction of a winding core jig in the element winding step of the electrolytic capacitor, the cathode foil flies out towards the extraction direction of the winding core jig, and hence a winding deviation malfunction easily occurs.

Patent Literature 9 describes an electrolytic capacitor utilizing a cathode containing a plurality of metal particles having a median diameter of from approximately 20 to 500 micrometers, where the particles are arranged on the surface of a substrate and are sintered and bonded. However, there is room for improvement because this is too large at the micron unit size and a geometrical structure necessary to retain a solid electrolyte and an electrolytic solution cannot be obtained. In addition, Patent Literature 6 to Patent Literature 8, and Patent Literature 10 to Patent Literature 24 can be mentioned as conventional techniques; however, it is considered that there is room for improvement in the function and performance in all of these.

### Citation List

### Patent Literature

Patent Literature 1: WO 2016/174806 A1
Patent Literature 2: WO 2016/174807 A1
Patent Literature 3: WO 2016/189779 A1
Patent Literature 4: JP 2014-022707 A
Patent Literature 5: JP 2012-174865 A
Patent Literature 6: JP 2023-002273 A
Patent Literature 7: WO 2017/090241 A1
Patent Literature 8: JP 2019-179884 A
Patent Literature 9: JP 2007-243203 A
Patent Literature 10: JP 2015-073015 A
Patent Literature 11: JP 2019-179884 A
Patent Literature 12: US 10896783 B2
Patent Literature 13: WO 2021/107063 A1
Patent Literature 14: WO 2012/115050 A1
Patent Literature 15: JP 2004-281223 A
Patent Literature 16: JP 2012-195527 A
Patent Literature 17: JP 2011-192924 A
Patent Literature 18: JP 2021-145135 A
Patent Literature 19: US 2009/0161299 A1
Patent Literature 20: EP 3817020 A1
Patent Literature 21: US 2014/0036416 A1
Patent Literature 22: US 2021/0383981 A1
Patent Literature 23: JP 2005-294500 A
Patent Literature 24: WO 2010/029598 A1
Patent Literature 25: JP 2006-190878 A
Patent Literature 26: JP 2022-057601 A
Patent Literature 27: JP 2022-057985 A

### Summary of Invention

### Technical Problem

In consideration of the above, the object of the present invention is to provide an electrode material which can be used for example in a cathode foil an electrolytic capacitor having at least one advantage of the below (1) to (7), and an electrolytic capacitor having a cathode foil using such an electrode material:
(1) having a good adhesion with a solid electrolyte and a low contact resistance at an interface,
(2) having a layer (geometrical structure and surface modification) for retaining a solid electrolyte and an electrolytic solution,
(3) having an excellent deterioration resistance with respect to a solid electrolyte, a chemical polymerizing solution, an electrolytic solution and moisture,
(4) having no capacitive component or a low capacitive component and acting as a low-resistance conductor,
(5) making it possible to be made thin,
(6) requiring low cost,
(7) barely causing a winding deviation.

### Solution to Problem

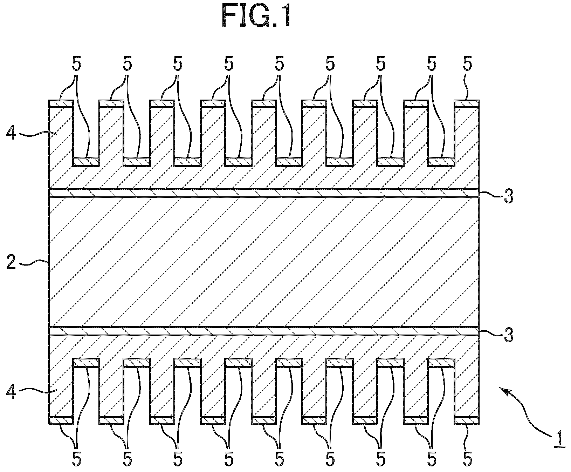

To solve the aforementioned problem, the present invention provides an electrode material having an oxide layer on a smooth base material and further having an inorganic conductive layer on the oxide layer, in which the inorganic conductive layer has a first conductive layer containing a metal and/or a metal compound, and a second conductive layer containing carbon, the first conductive layer has an uneven portion on the surface layer side thereof, and the second conductive layer is positioned at the outermost layer of the inorganic conductive layer. The 'smooth base material' here, in one example, is a base material of which no roughening treatment such as etching was performed; however, it is not necessary for the base material surface to be completely flat. A smooth base material also includes that of which micro coarseness and undulations exist on a surface due to unavoidable slight rolling stripes, scars etc. which occur in a foil base manufacturing process such as rolling processing for example (of course, the base material surface may also be completely smooth). Moreover, the 'oxide layer' may also be an oxide layer formed without performing any special treatment such as in a natural oxide film or may also be an oxide layer intentionally formed by treatment such as a formation treatment. The oxide layer may completely or partially coat the smooth base material, and the smooth base material and the first conductive layer may also be in direct contact for example by means of the dense layer material in the first conductive layer penetrating the oxide layer portion (forming a dense layer by the arc ion plating (AIP) method for example, as mentioned below). Furthermore, when the second conductive layer is formed on the uneven portion of the first conductive layer, there are cases where the second conductive layer is divided into multiple portions due to the shape of this uneven portion (see Fig. 1 etc. in relation to the embodiments mentioned below); however, the 'layer' in the above descriptions as well as in the descriptions below may also be a 'layer' formed by division into such multiple portions (not limited to the second conductive layer; the same also applies to any layer).

The smooth base material and the first conductive layer may be composed of substances which differ from each other.

The second conductive layer may be a layer substantially consisting of carbon.

The phrases 'substantially consisting of carbon' or 'consisting of carbon' in the above description does not necessarily mean that components other than carbon are not contained whatsoever as substances constituting this second conductive layer. The actual component constituents can be variously changed, e.g., in accordance with the limits on manufacture technology in relation to controls of component in the layer purity and mixing of impurities in the layer, and in accordance with the degree of resistance as a tolerable error in the aforementioned electrode material in other separate products (components other than carbon may also be contained in the second conductive layer, within the range that the function of the electrode material is maintained to an allowable extent). This point also applies to descriptions such as 'substantially consisting of XX', 'consisting of XX', 'substantially containing only XX', and 'containing only XX'.

The inorganic conductive layer may further have a dense layer in which the metal and/or the metal compound is densely present, and the dense layer may be formed between the oxide layer and the first conductive layer. The term 'is densely present' here means that (the metal and/or the metal compound) exists densely compared to that in the aforementioned 'uneven portion'.

In the inorganic conductive layer, both the first conductive layer and the second conductive layer, or at least the first conductive layer may be a layer consisting of a particle deposition layer. The first conductive layer may be a layer containing at least one kind from amongst titanium, aluminum, a nitride thereof, an oxide thereof, an oxynitride thereof, a carbide thereof, and a carbonitride thereof. The substances which can be used in the first conductive layer are not limited to these; however, when using an aluminum base material as the base material, from the viewpoints of energy efficiency and adhesion with the aluminum base material, it is preferable to use a metal such as titanium (Ti) and aluminum (Al) in particular (metals containing a plurality of components such as alloys may also be used to the extent that the adhesion with the base material and electroconductivity in the first conductive layer are not lost).

The oxide layer may be a phosphorous-containing oxide layer.

The smooth base material may be a base material containing aluminum or an aluminum alloy. Materials which can be used as the base material are not limited to aluminum, but any other materials which are valve action metals such as tantalum (Ta), titanium (Ti), niobium (Nb), hafnium (Hf), zirconium (Zr), zinc (Zn) and tungsten (W), any other materials, or aluminum alloys in which any of these materials are added to aluminum can also be used.

The maximum value of an electric current value of a cyclic voltammogram obtained by means of the cyclic voltammetry method, under the conditions of a sweep range being ±0.3 V vs Pt, a sweep rate being 500 mV/sec, an electrolytic solution at 30°C, Pt as a reference electrode, stainless steel as a counter electrode, and the electrode material as a working electrode, may be 6.5 times or more of the maximum value of an electric current value of a cyclic voltammogram under the same conditions except for using the smooth base material as a working electrode.

A mixed layer in which substances constituting the first conductive layer and substances constituting the second conductive layer are present in a mixed state is formed between the first conductive layer and the second conductive layer. The components of the mixed layer may be constituted so as to change from components substantially containing only the substances constituting the first conductive layer to components substantially containing only the substances constituting the second conductive layer, upon heading from the first conductive layer towards the second conductive layer. Similarly to that already mentioned, the phrases 'substantially containing only the substances constituting the first conductive layer' and 'containing only the substances constituting the first conductive layer' do not necessarily mean that components other than the 'substances constituting the first conductive layer' are not contained whatsoever. Moreover, the phrases 'substantially containing only the substances constituting the second conductive layer' and 'containing only the substances constituting the second conductive layer' do not necessarily mean that components other than the 'substances constituting the second conductive layer' are not contained whatsoever (other components may also be contained within the range in which the function of the electrode material is maintained to an allowable extent).

Moreover, in the above description, the phrase 'so as to change from components substantially containing only substances constituting the first conductive layer to components substantially containing only substances constituting the second conductive layer, upon heading from the first conductive layer towards the second conductive layer' does not necessarily mean that the content of the substances constituting the second conductive layer in the mixed layer monotonically increases in the direction from the first conductive layer towards the second conductive layer. The actual components in each position in the mixed layer can undergo a variety of changes in accordance with fluctuations etc. in each of the component concentrations arising due to limits on manufacture technology. However, a mixed layer is preferably formed so that the content of the substances constituting the second conductive layer increases continuously whilst heading from the first conductive layer towards the second conductive layer.

A mixed layer in which substances constituting the first conductive layer and substances constituting the second conductive layer are present in a mixed state is formed between the first conductive layer and the second conductive layer, and components of the mixed layer are constituted so as to change from components substantially containing only substances constituting the first conductive layer to components substantially containing only substances constituting the second conductive layer, upon heading from the first conductive layer towards the second conductive layer, and when the amount of each C bond state present is analyzed by means of XPS (X-ray photoelectron spectroscopy) with respect to the depth direction from the surface layer of the second conductive layer, the ratio of the amount of present bonds between metal elemental atoms and carbon atoms constituting the first conductive layer may be 5% or more, with respect to the total amount of said each C bond state present by means of the C1s spectrum.

For a half width of a G band peak obtained by peak separation in a Raman spectrum by means of Raman spectroscopy, the half width of carbon contained in the second conductive layer may be 3.8 times or more with respect to the half width of graphite crystals.

The substances constituting the first conductive layer and the substances constituting the second conductive layer may differ from each other.

The BET specific surface area obtained using krypton (Kr) as an adsorption gas may be 1.5 times or more of said BET specific surface area of the smooth base material.

The mean diameter of a projecting part of an uneven portion on the surface layer side of the inorganic conductive layer may be 210 nm or less.

The carbon may be a graphite-like carbon.

Although there are no particular limitations on the kind of material to employ as the carbon, the use of a graphite-like carbon which has particularly excellent electric conductivity amongst the carbon materials is preferable for reducing the ESR of the electrolytic capacitor; and is moreover preferable also in terms of manufacturing costs. Here, graphite-like carbon means that, of the carbon which has an amorphous structure with mixed bonds of both diamond bonds (sp³ hybrid orbital bonds of the carbons) and graphite bonds (sp² hybrid orbital bonds of the carbons), the ratio of graphite bonds is more than 50% (the number of graphite bond is higher than the number of diamond bonds). However, besides an amorphous structure, also included are those having a phase consisting of a crystal structure (namely, hexagonal-based crystal structure consisting of sp² hybrid orbital bonds) which consists of a partially graphite structure. The ratio of sp³ bond and sp² bond states in the carbon can be analyzed by methods such as Raman spectroscopy and XPS (X-ray photoelectron spectroscopy (also known as ESCA)).

In the electrode material of an embodiment of the present invention, a static friction coefficient and a dynamic friction coefficient of a surface on the surface layer side with respect to a separator paper may be respectively higher than a static friction coefficient and a dynamic friction coefficient of a surface on a surface layer side of an electrode material with respect to a separator paper, the electrode material comprising a conductive layer consisting of carbon, which is the outermost layer on the surface layer side, and comprising no uneven portion on the surface layer side.

The present invention also provides a cathode foil for an electrolytic capacitor, in which at least a solid electrolyte is interposed between an anode foil and the cathode foil, the cathode foil using the aforementioned electrode material of the present invention.

The present invention also provides an electrolytic capacitor in which at least a solid electrolyte is interposed between an anode foil and a cathode foil, the electrolytic capacitor having the aforementioned cathode foil of the present invention. In one example, a solid electrolyte capacitor is provided.

The aforementioned electrolytic capacitor may be an electrolytic capacitor in which an electrolytic solution is further interposed between the anode foil and the cathode foil. In one example, a hybrid capacitor is provided.

### Advantageous Effects of Invention

The present invention provides an electrode material that can be used for example in a cathode foil for an electrolytic capacitor, having at least one advantage of the aforementioned (1) to (7) mentioned in relation to the 'Technical Problem', and an electrolytic capacitor having a cathode foil using such an electrode material. Specifically, these are as follows, for example.
· By using a smooth foil, not an etched base material, there is no concern of residual chlorine, and no longer a problem that exposed aluminum portions appear, due to the difficulty for the substances in an inorganic conductive layer to go round into the inside of the etched layer. Thus, excellent deterioration resistance (chemical resistance and durability) with respect to a solid electrolyte, a chemical polymerizing solution, an electrolytic solution and moisture is made possible ((3)); thinning whilst keeping strength is made possible ((5)); and because the etching step can be eliminated, further reduction of costs, including the problem of waste liquid facilities, is made possible ((6)).
· By providing an inorganic conductive layer having an uneven portion on the surface layer side on a smooth foil by means of vapor deposition in one example, a geometrical structural layer suited to retain a solid electrolyte and an electrolytic solution is made possible ((2)).
· The geometrically uneven structure provided on the surface layer side improves the adhesion with a solid electrolyte ((1)).
· The geometrically uneven structure provided on the surface layer side suppresses the occurrence of a winding deviation malfunction, which easily occurs when extracting a winding core jig in the element winding step of the electrolytic capacitor, because the static and dynamic friction forces (each friction coefficient) with respect to a separator paper increase ((7)).
· By providing a layer containing carbon at the outermost layer of the inorganic conductive layer, a low resistance cathode foil having no capacitive component can be obtained (the generation of a depletion layer due to contact of a solid electrolyte with e.g. an oxide film of aluminum, is suppressed by forming the first conductive layer containing a metal and/or a metal compound and the second conductive layer containing carbon on the aluminum oxide layer, and a contact resistance with a solid electrolyte is greatly reduced) ((1) and (4)).

### Brief Description of Drawings

[Fig. 1] is a sectional view illustrating a layer structure of a cathode foil using the electrode material in an embodiment of the present invention.
[Fig. 2] is a sectional view illustrating a layer structure of a cathode foil using the electrode material in an embodiment of the present invention (Modified Example 1).
[Fig. 3] is a sectional view illustrating a layer structure of a cathode foil using the electrode material in an embodiment of the present invention (Modified Example 2).
[Fig. 4] is a sectional view illustrating a layer structure of a cathode foil using the electrode material in an embodiment of the present invention (Modified Example 3).
[Fig. 5] is a sectional view in an embodiment of the present invention illustrating a layer structure of a cathode foil using an electrode material in which each layer is laminated only on one side of the base material, unlike in Fig. 1.
[Fig. 6] is a sectional view in an embodiment of the present invention illustrating a layer structure of a cathode foil using an electrode material in which each layer is laminated only on one side of the base material, unlike in Fig. 2.
[Fig. 7] is a sectional view in an embodiment of the present invention illustrating a layer structure of a cathode foil using an electrode material in which each layer is laminated only on one side of the base material, unlike in Fig. 3.
[Fig. 8] is a sectional view in an embodiment of the present invention illustrating a layer structure of a cathode foil using an electrode material in which each layer is laminated only on one side of the base material, unlike in Fig. 4.
[Fig. 9] is an exploded view illustrating the structure of a winding type solid electrolytic capacitor and a winding type hybrid capacitor, which are embodiments of the present invention.
[Fig. 10] is a TEM (Transmission Electron Microscopy) photograph (cross-sectional image) of a cathode foil using an electrode material (Example 2 mentioned below), which is an embodiment of the present invention.
[Fig. 11] is a TEM photograph (cross-sectional image) of a cathode foil using an electrode material, which is another embodiment of the present invention (Example 4 mentioned below).
[Fig. 12] is a STEM (Scanning Transmission Electron Microscopy) photograph (cross-sectional image) of the same cathode foil as that of Fig. 10 (Example 2).
[Fig. 13] is a STEM photograph (cross-sectional image) of the same cathode foil as that of Fig. 11 (Example 4).
[Fig. 14] is a TEM photograph (bright field image, cross-sectional image) of the same cathode foil as that of Fig. 10 (Example 2).
[Fig. 15] is a TEM photograph (bright field image, cross-sectional image) of the same cathode foil as that of Fig. 11 (Example 4).
[Fig. 16] is a graph showing the analytical result of the same cathode foil as that of Fig. 10 (Example 2) by means of the ToF-SIMS (Time-of-Flight Secondary Ion Mass Spectrometry) (showing a profile distribution of the chemical bond states).
[Fig. 17] is a graph showing the analytical result of the same cathode foil as that of Fig. 11 (Example 4) by means of ToF-SIMS (showing a profile distribution of the chemical bond states).
[Fig. 18] is a graph of a Raman scattering spectrum obtained by laser microscope Raman spectroscopy analysis (total wavenumber region) of the same cathode foil as those of Fig. 10 and Fig. 11 (Examples 2 and 4).
[Fig. 19] is a graph of a Raman scattering spectrum obtainable by laser microscope Raman spectroscopy analysis (C-C bond region) of the same cathode foil as those of Fig. 10 and Fig. 11 (Examples 2 and 4).
[Fig. 20] is a table showing the results of ESR measurement performed respectively on Examples 1 to 11 of a hybrid capacitor, and Comparative Examples 1 to 3 of a hybrid capacitor.
[Fig. 21] is a table showing the results of ESR measurement performed respectively on Examples 1 to 11 of a solid electrolytic capacitor, and Comparative Examples 1 to 3 of a solid electrolytic capacitor.
[Fig. 22] is an elemental profile distribution of the same cathode foil as that of Fig. 10 (Example 2), obtained by TEM-EDS (Transmission Electron Microscopy-Energy Dispersive X-ray Spectroscopy).
[Fig. 23] is an elemental profile distribution of the same cathode foil as that of Fig. 11 (Example 4), obtained by TEM-EDS.
[Fig. 24] is an elemental profile distribution of the same cathode foil as that of Fig. 10 (Example 2), obtained by STEM-EELS (Scanning Transmission Electron Microscopy-Electron Energy Loss Spectroscopy; more towards the carbon conductive layer side than in Fig. 25).
[Fig. 25] is an elemental profile distribution of the same cathode foil as that of Fig. 10 (Example 2), obtained by STEM-EELS (more towards the base material side than in Fig. 24).
[Fig. 26] is an elemental profile distribution of the same cathode foil as that of Fig. 11 (Example 4), obtained by STEM-EELS (more towards the carbon conductive layer side than in Fig. 27).
[Fig. 27] is an elemental profile distribution of the same cathode foil as that of Fig. 11 (Example 4), obtained by STEM-EELS (more towards the base material side than in Fig. 26).
[Fig. 28] is a table showing the results of a tape adhering test performed on each the cathode foils of Examples 1, 2, 4 or 5 and the cathode foil of Comparative Example 1.
[Fig. 29] is a table showing: the results of a contact angle measurement on each of the same cathode foils as those of Fig. 10 and Fig. 11 (Examples 2 and 4) and the cathode foil of Comparative Example 1; and the breakdown of the surface free energy calculated therefrom (hydrogen bonding component and dispersion force component).
[Fig. 30] a) is a SEM (Scanning Electron Microscopy) photograph (surface image) of the same cathode foil as that of Fig. 10 (Example 2). b) is an SEM photograph (surface image) of the same cathode foil as that of Fig. 11 (Example 4). c) is an SEM photograph (surface image) of the cathode foil of Example 5. d) is an SEM photograph (surface image) of the cathode foil of Example 6.
[Fig. 31] is a table illustrating the mean diameters (Feret diameters) of Examples 1 to 6 and 8.
[Fig. 32] a) is a graph showing the amounts of each element present in the depth direction, of the same cathode foil as that of Fig. 10 (Example 2), obtained by XPS (X-ray photoelectron spectroscopy). b) is a graph showing the total of each C bond state in the depth direction and the amount of TiC bonds present, of the same cathode foil as that of Fig. 10 (Example 2), obtained by XPS.
[Fig. 33] is a narrow scan spectrum caused by the C bond states of the same cathode foils as those of Fig. 10 and Fig. 11 (Examples 2 and 4), obtained by XPS.
[Fig. 34] is a table showing the static friction coefficient and the mean dynamic friction coefficient of the cathode foils of Examples 2, 4 and 5, and the cathode foil of Comparative Example 1.
[Fig. 35] is a drawing with the G band peak separated from the spectrum of the same cathode foil as that of Fig. 10 (Example 2), obtained by Raman spectroscopy.
[Fig. 36] is a table illustrating the magnification of the BET specific surface area of the cathode foils of Examples 1 to 8 by means of the Kr adsorption method with respect to the BET specific surface area of the smooth base material.

### Description of Embodiments

A cathode foil for an electrolytic capacitor using an electrode material, and an electrolytic capacitor using the cathode foil will be explained below as an embodiment of the present invention. However, as already mentioned, the aluminum foil used as a base material in the below explanation, and the titanium (Ti) or aluminum (Al) for forming the first conductive layer may be substituted with other materials. For example, materials for forming the first conductive layer may include any of the following: tantalum (Ta), titanium (Ti), chromium (Cr), aluminum (Al), niobium (Nb), vanadium (V), tungsten (W), hafnium (Hf), copper (Cu), zirconium (Zr), zinc (Zn), as well as nitrides of these metals, oxides of these metals, oxynitrides of these metals, carbides of these metals, and carbonitrides of these metals (the first conductive layer may contain any other material besides these, and the same also applies to the other layers). Moreover, the carbon is not limited to graphite-like carbon but may be any carbon material. Furthermore, the applications of the electrode material of the present invention are also not limited to a cathode foil for a solid electrolytic capacitor or a hybrid capacitor, but also an electrode (such as a cathode, an anode, a positive electrode and a negative electrode) of any other electrical storage element such as a secondary battery, an electric double layer capacitor and a lithium ion capacitor. The electrolytic capacitor of the present invention is not limited to the winding type electrolytic capacitor mentioned below, but may be any type such as e.g. a laminated type and a chip type. The uneven part of the first conductive layer shown in Fig. 1 for example mentioned below need not be formed over the entire surface of the surface layer side of the first conductive layer, but the uneven part may also be provided only partially on the surface layer side of the first conductive layer (of course, the uneven part may also be formed over the entire surface on the surface layer side of the first conductive layer). The entirety of the surface of the 'smooth' base material referred to in Fig. 1 for example mentioned below does not need to be smooth, and the 'smooth base material' also includes that in which micro-coarseness and undulations are present on the surface due to unavoidable slight rolling stripes, scars etc. which occur in a foil base manufacturing process such as rolling processing for example (of course, the base material surface of the smooth base material may also be completely smooth). The 'second conductive layer' explained in relation to Fig. 1 for example mentioned below may also be a layer (substantially) consisting of carbon; however, the layer may also contain components other than carbon, such as any of the following, for example: tantalum (Ta), titanium (Ti), chromium (Cr), aluminum (Al), niobium (Nb), vanadium (V), tungsten (W), hafnium (Hf), copper (Cu), zirconium (Zr), zinc (Zn), as well as nitrides of these metals, oxides of these metals, metal oxynitrides of these metals, carbides of these metals, and carbonitrides of these metals. The carbon content in the second conductive layer may be any content. Moreover, it is not a requirement that the electrode material, cathode foil for electrolytic capacitor, or electrolytic capacitor of the present invention be provided with all of the layers, constituent elements and structures explained below in the embodiments; the electrode material and the cathode foil for an electrolytic capacitor also need not be provided with at least any one or more layers of the dense layer and the mixed layer. In Fig. 1 mentioned below for example, the first conductive layer and the like are formed at both surfaces of the smooth base material; however, the elements of each type of layer, or the uneven part etc., may also be provided at only one surface of the smooth base material, or may also be provided at both surfaces. An electrolytic capacitor having an electrode material or having a cathode foil using the electrode material, can also be composed such that a layer structure whose first surface and second surface of the base material differ, such as the case where an oxide layer is provided at the first surface (surface of the front side) of the smooth base material but the oxide layer is not provided at the second surface (surface of the back side) etc., is provided; and such that the existence and arrangements etc. of the elements of the uneven part etc. also differ from that of the present invention at the surface of one side. Other layers and elements, structures, characteristics etc. can also be suitably omitted to the extent that the functions of the electrode material, cathode foil for electrolytic capacitor or electrolytic capacitor of the present invention can be exhibited; moreover, layers and elements, structures and characteristics other than those explained in the below embodiments may also be provided in the electrode material, cathode foil for electrolytic capacitor or electrolytic capacitor of the present invention to the extent that the functions of the electrode material or electrolytic capacitor of the present invention can be exhibited. Moreover, any material in the electrode material of the present invention can be used as the cathode foil in the electrolytic capacitor of the present invention. Each of the layers, elements, structures, characteristics etc. explained may be appropriately selected and suitably combined; and all the electrode material, cathode foil for an electrolytic capacitor and electrolytic capacitor, etc. obtained by such selection and combination are included in the scope of the invention.

The aforementioned deterioration resistance with respect to a solid electrolyte, a chemical polymerizing solution, an electrolytic solution and moisture can be further improved by doing the following.
· When the adhesion of the smooth foil with the interface of the vapor deposition layer is insufficient, a vapor deposition layer may be provided after covering the smooth foil with a dense inorganic conductive layer, where covering the smooth foil with a dense inorganic conductive layer completely eliminates the exposed portion of aluminum in one example, and hence chemical resistance and durability can be improved.
· Providing a phosphorous(P)-containing oxide film on a smooth foil and thereafter covering it with a dense inorganic conductive layer can further improve the chemical resistance and durability (even when a dense layer is not formed, providing a phosphorous-containing oxide film on a smooth base material by formation treatment etc. can improve chemical resistance and durability).

### Cathode foil using the electrode material of the present invention

Fig. 1 is a sectional view illustrating a layer structure of a cathode foil using the electrode material in an embodiment of the present invention. The cathode foil (electrode material) 1 has: a base material (smooth aluminum foil) 2 not roughened by a treatment such as an etching treatment; an oxide layer 3 such as a natural oxide film or an artificially formed phosphorous-containing oxide film, formed on the smooth aluminum foil 2; an uneven first conductive layer 4 formed from Ti or Al on the oxide layer 3; and a second conductive layer 5 formed on the first conductive layer 4.

A commercially available high-purity aluminum sheet can be used as the smooth aluminum foil 2. Although there is no particular limitation on the thickness of the aluminum sheet, a thickness of 10 µm or more and 50 µm or less is preferable for the aluminum sheet used as a cathode foil for a winding type electrolytic capacitor (such as a solid electrolytic capacitor and a hybrid capacitor).

The oxide layer 3 is an oxide layer such as a natural oxide film, or an oxide film intentionally formed for example by a formation treatment such as a phosphorous-containing anodic oxidation or an immersion treatment. The oxide film is formed, e.g., by exposing the smooth aluminum foil 2 in air, or by performing an anodic oxidation treatment with an ammonium dihydrogen phosphate solution, or by a heat treatment after immersion in an aqueous phosphoric acid solution or in an aluminum biphosphate aqueous solution.

In one example, the first conductive layer 4 is formed by: arranging in a vacuum chamber, a smooth aluminum foil 2 on which an oxide layer 3 is formed, or when a dense layer 6 described later is formed though it is not a requirement, a smooth aluminum foil 2 having an oxide layer 3 on which a dense layer 6 is further formed by a method such as an arc ion plating method in the vacuum chamber, and Ti or Al that is an evaporation source metal material; and evaporating the metal material to make the evaporated metal material adhere onto the oxide layer 3 (or when the dense layer 6 is formed, onto the dense layer 6) (vapor deposition method). As the vapor deposition method, methods such as the chemical vapor phase deposition (CVD) method and the sputtering method can be used; however, among the vacuum deposition methods, the electron beam vapor deposition method is well-suited in terms of control of the geometrical structure. The electron beam vapor deposition method is a method of irradiating an accelerated electron beam at a vapor deposition substance to heat and vaporize this, thereby depositing this substance on the base material. The granularity of the unevenness in the first conductive layer can be controlled, for example, by adjusting the particle diameter of the metallic material made to adhere. The particle diameter of the metal material can be suitably controlled in the vapor deposition by, e.g., adjusting the conditions such as the type of gas to be introduced, the degree of vacuum and the temperature of the base material. In a mode in which a first conductive layer 4 consisting of a nitride, an oxide or a carbide of a metal such as Ti or Al is formed on the smooth aluminum foil 2 on which the oxide layer 3 is formed, or when the dense layer 6 is formed, the smooth aluminum foil 2 on which the dense layer 6 is further formed on the oxide layer 3, the first conductive layer 4 may be formed by performing the aforementioned method for example in an atmosphere of nitrogen gas, oxygen gas, or a hydrocarbon gas such as acetylene gas and methane gas. Moreover, in the mode of forming a first conductive layer 4 consisting of an oxynitride or a carbonitride of a metal such as Ti or Al, the first conductive layer 4 may be formed in an atmosphere for example of nitrogen gas and oxygen gas, or of nitrogen gas and a hydrocarbon gas such as acetylene gas and methane gas.

The second conductive layer 5 is not formed by dispersing carbon particles in a binder such as a resin binder and then applying this, for example, but is preferably formed for example by employing a vapor deposition method such as the ion plating method. This is because in a layer of carbon particles formed by kneading with a binder, the occupation rate of carbon substantially decreases by the quantity of the binder to be mixed in, the contact between the material of the first conductive layer and carbon particles in a lower layer is a point contact, the formation of a mixed layer is also difficult, moreover, it is difficult to increase the electric conductivity at the interface by the aforementioned application method, the interface resistance increases while adhesion also worsens, and a thin and uniform coating is difficult. The second conductive layer 5 is preferably formed as a smooth and dense GLC (Graphite-Like Carbon) film. Moreover, the degree of the non-crystallinity is high to the extent that the half width, obtained by measuring the carbon by Raman spectroscopy and separating the G band peak (sp² bonding portion), is large, and properties such as the density, hardness and Young's modulus increase in general. Thus, it is preferable to determine the half width of the carbon used in the second conductive layer 5 so as to be 3.8 times or more of the half width of a crystal graphite. Thereby, the second conductive layer 5 has a higher degree of non-crystallinity to be a film with excellent deterioration resistance (chemical resistance and durability) with respect to a solid electrolyte, a chemical polymerizing solution, an electrolytic solution and moisture. When the second conductive layer 5 is formed on the uneven portion of the first conductive layer 4, since the shape of the second conductive layer 5 is dependent on the shape of the uneven portion of the first conductive layer 4, the second conductive layer 5 does not necessarily need to be uneven (the thickness thereof is substantially constant) and may be a smooth and dense film. As shown in Figs. 1 to 8, since the surface on the surface layer side in the electrode material 1 has unevenness (however, the surface having unevenness is not a requirement in electrode material 1), the static friction coefficient and the dynamic friction coefficient of a surface on the surface layer side in the electrode material 1 with respect to a separator paper are considered to be respectively higher than the static friction coefficient and the dynamic friction coefficient of a surface on the surface layer side of an electrode material with respect to a separator paper, the electrode material comprising a conductive layer consisting of carbon, which is the outermost layer on the surface layer side, and comprising no uneven portion on the surface layer side.

The second conductive layer 5 is obtained by a method similar to that of the dense layer 6; however, among these, an ion plating method such as the arc ion plating method which has a particularly high ionization rate and adhering energy of the film forming material is one of the preferred means because of the ease of forming a mutual diffusion state with the first conductive layer and the high lowering effect of the interface resistance. Specifically, the second conductive layer 5 is formed by: arranging a laminate body in which the oxide layer 3 and the first conductive layer 4 are formed on the smooth aluminum foil 2 (when forming the dense layer 6, the dense layer 6 is further formed between the oxide layer 3 and the first conductive layer 4), and a carbon material as an evaporating source (graphite material as one example, when forming the second conductive layer 5 as a GLC film) in a vacuum chamber; then evaporating and ionizing the carbon material by generating a vacuum arc discharge between an anode and a cathode that is the evaporating source target; and guiding the carbon cations thereby generated towards the laminate body. The arc ion plating method is well-suited for the formation of a high melting point compound film such as a carbide or nitride, because a high Joule heat by the arc current can be locally generated on a target, and because the ionization rate of the evaporated film forming substance can be increased due to the high plasma density. Here, a negative bias voltage may also be applied to the laminate body to accelerate the carbon cations heading towards this laminate body. When providing an uneven geometric shape to second conductive layer 5, the carbon material (a graphite material as one example, when forming the second conductive layer 5 as a GLC film) may be guided by employing the same electron beam vapor deposition method as that employed to form the uneven portion of first conductive layer 4. Although the second conductive layer 5 may also contain any component besides carbon, when forming a second conductive layer 5 containing a component other than carbon, any other material in addition to the carbon material may be prepared as an evaporating source, and not only carbon material but this other material may also be similarly evaporated and ionized and guided towards the laminate body.

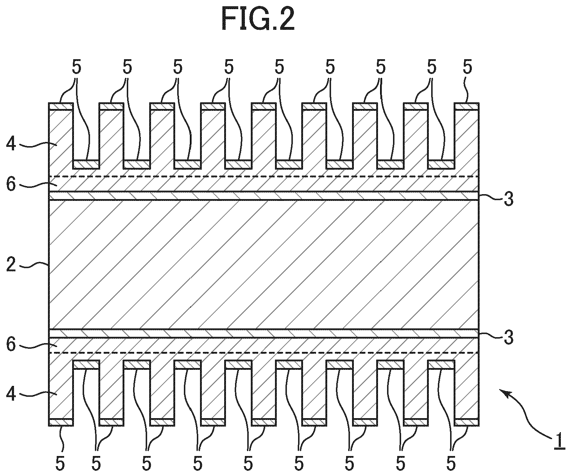

Fig. 2 is a sectional view illustrating a layer structure of a cathode foil utilizing the electrode material in an embodiment of the present invention (Modified Example 1). Unlike the layer structure of Fig. 1, a dense layer 6 is formed between the oxide layer 3 and the first conductive layer 4.

The dense layer 6 is formed by: arranging a smooth aluminum foil 2 on which the oxide layer 3 is formed, and a Ti or Al metallic material as an evaporating source in a vacuum chamber; then evaporating and ionizing the Ti or Al by means of an electron beam and plasma generating electrode etc.; and guiding the metal cations ionized by the arc discharge and thereby generated, towards the smooth aluminum foil 2. Here, a negative bias voltage may also be applied to the smooth aluminum foil 2 to accelerate the metal cations heading towards this smooth aluminum foil 2. Thus, the Ti or Al ions penetrate the oxide layer 3 formed on the surface of the smooth aluminum foil 2, and rigidly adhere to the smooth aluminum foil 2. However, it is not a requirement for the material of the first conductive layer 4 to penetrate the oxide layer 3 and adhere to the smooth aluminum foil 2. An oxide layer 3 such as a natural oxide film, or an oxide film formed by means of a phosphorous-containing anodic oxidation treatment may also be present without having pores etc. between the first conductive layer 4 and the smooth aluminum foil 2. In the mode of forming a dense layer 6 consisting of a nitride, an oxide or a carbide of a metal such as Ti or Al, on the smooth aluminum foil 2 on which the oxide layer 3 is formed, the dense layer 6 may be formed by performing the aforementioned method in e.g. an atmosphere of nitrogen gas, oxygen gas, or a hydrocarbon gas such as acetylene gas and methane gas. Moreover, in the mode of forming a dense layer 6 consisting of an oxynitride or carbonitride of a metal such as Ti or Al, the dense layer 6 may be formed in an atmosphere of e.g., nitrogen gas and oxygen gas, or nitrogen gas and a hydrocarbon gas such as acetylene gas and methane gas.

Moreover, in addition to ion plating methods such as the arc ion plating method, as other methods for forming the dense layer 6, the vacuum deposition method, chemical vapor phase deposition method, sputtering method, atom layer deposition method, sol-gel method, plating method, coating method, and printing method etc. can also be employed. In one example, the ion plating method can be used from the perspective of suppressing the ESR of the capacitor lower due to the dense layer 6 and smooth aluminum foil 2 penetrating and firmly adhering to the oxide layer 3, and from the perspective of easily forming a smooth metal film.

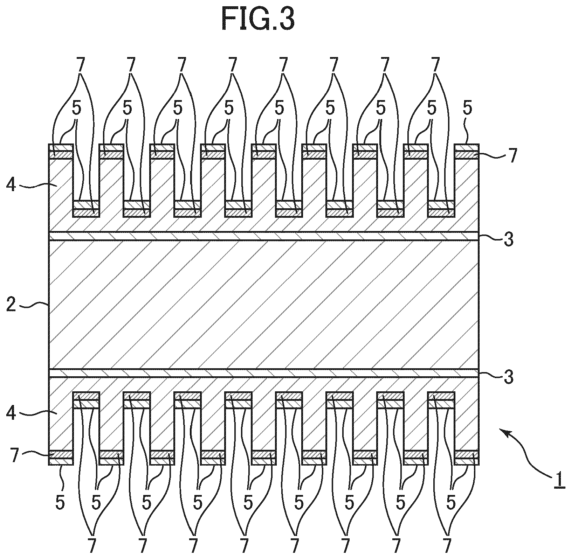

Fig. 3 is a sectional view illustrating a layer structure of a cathode foil utilizing the electrode material in an embodiment of the present invention (Modified Example 2). Unlike the layer structure of Fig. 1, a mixed layer 7 is formed between the first conductive layer 4 and the second conductive layer 5.

In one example, the mixed layer 7 can be formed by performing the step of forming the first conductive layer 4 by means of a vapor deposition method such as the aforementioned vacuum deposition method, and the step of forming the second conductive layer 5 by the arc ion plating method, such that the time arises for both these steps to take place simultaneously, without completely time-separating the forming step of the first conductive layer 4 and the forming step of the second conductive layer 5. By introducing such a mixed layer 7, the adhesion and chemical stability of the substance constituting the first conductive layer 4 (a metal, or any substance containing the nitride, oxide, oxynitride, carbide or carbonitride of the metal, as mentioned above) and a substance constituting the second conductive layer 5 (carbon such as GLC, and when the second conductive layer 5 also includes a material other than carbon, any other substance contained in the second conductive layer 5) are increased, and a change in quality due to the chemical reaction of metal is prevented.

The mixed layer 7 is preferably constituted so as to substantially contain only the substances constituting the first conductive layer 4 in the boundary region with the first conductive layer 4 and substantially contain only the substances constituting the second conductive layer 5 in the boundary region with the second conductive layer 5, and such that the content of the substances constituting the second conductive layer 5 is continuously increased particularly upon heading from first conductive layer 4 towards second conductive layer 5. Such a mixed layer 7 can be formed, as one example, by:
(i) at the start of the film-forming of the mixed layer 7, performing only the vapor deposition method, which is a forming step of the first conductive layer 4, and not performing electron beam irradiation on a carbon material such as a graphite material (as well as on any other material of the second conductive layer 5, when the second conductive layer 5 also contains a material other than carbon);
(ii) in accordance with the passage of time, gradually lowering the amount of metal material evaporated in the vapor deposition method which is a forming step of the first conductive layer 4 by lowering the electron beam irradiation amount towards the material constituting the first conductive layer 4, and simultaneously raising the electron beam irradiation amount towards a carbon material such as a graphite material (as well as on any other material of the second conductive layer 5, when the second conductive layer 5 also contains a material other than carbon), thereby mixing the substances constituting the first conductive layer 4 and the substances constituting the second conductive layer 5, and forming a mixed film such that the content of the substances constituting the second conductive layer 5 is increased upon heading towards an upper layer; and
(iii) at the end of the film-forming, ending the vapor deposition method which is a forming step of the first conductive layer 4, performing only the arc ion plating method which is a forming step of the second conductive layer 5, and forming a film in which substantially only the substances constituting the second conductive layer are present. In addition, when forming the mixed layer 7 by the vapor deposition method (for forming the first conductive layer 4) and the sputtering method (for forming the second conductive layer 5), a mixed layer 7 of a preferrable mode can be formed by any method including: lowering the evaporating amount of the material of the first conductive layer 4 with the passage of time; and raising the voltage applied to a carbon target such as a graphite target (as well as to any other target of the material of the second conductive layer, when the second conductive layer 5 also contains a material other than carbon) (raising the sputter rate of the graphite target and the target of the other material of the second conductive layer if using it).

Moreover, (i) to (iii) are processes mainly suited to the single wafer treatment of a batch method; however, as another alternative a mixed layer can also be formed by the roll-to-roll method, in which a continuous film forming treatment is performed in the order of from the first conductive layer to the second conductive layer whilst conveying a foil, in a chamber where the material target constituting the first conductive layer and then the material target constituting the second conductive layer are arranged in this order. A mixed layer is formed by arranging each of the first and second vapor deposition source targets next to each other such that the vapor and ions of each vapor deposition material conically radiated from each of the first and second evaporating source targets towards the base material have an overlap with (contact with) each other prior to arriving at the base material. By suitably controlling each of the distances of each of these vapor deposition source targets, and the distances of each vapor deposition source target and base material, the mixing and the diffusion state and bond state etc. of the mixed layer are adjusted to the optimal states. In this case, the aforementioned increase/decrease adjustment of the electron beam irradiation amount does not take place, each may be always constant, and hence this process can be said to be more suited for mass production. Moreover, regardless of the distance of each of the vapor deposition source targets and the distance of each vapor deposition source target and base material, a mixed layer may also be obtained by heating the base material temperature to about several hundred °C for example.

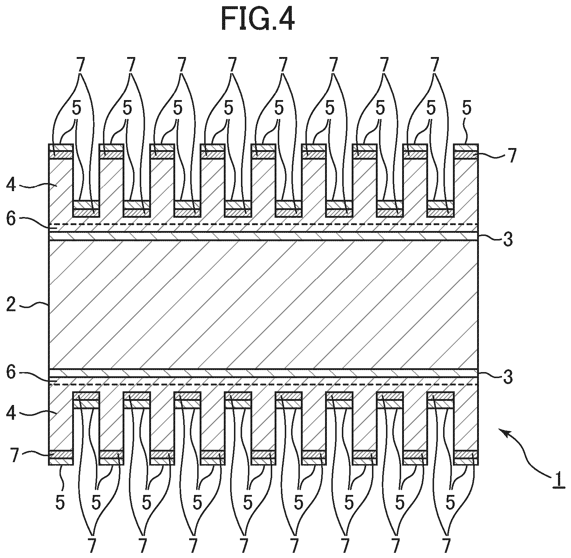

Fig. 4 is a sectional view illustrating a layer structure of a cathode foil utilizing the electrode material in an embodiment of the present invention (Modified Example 3). Unlike the layer structure of Fig. 1, the dense layer 6 is formed between the oxide layer 3 and the first conductive layer 4, and the mixed layer 7 is formed between the first conductive layer 4 and the second conductive layer 5.

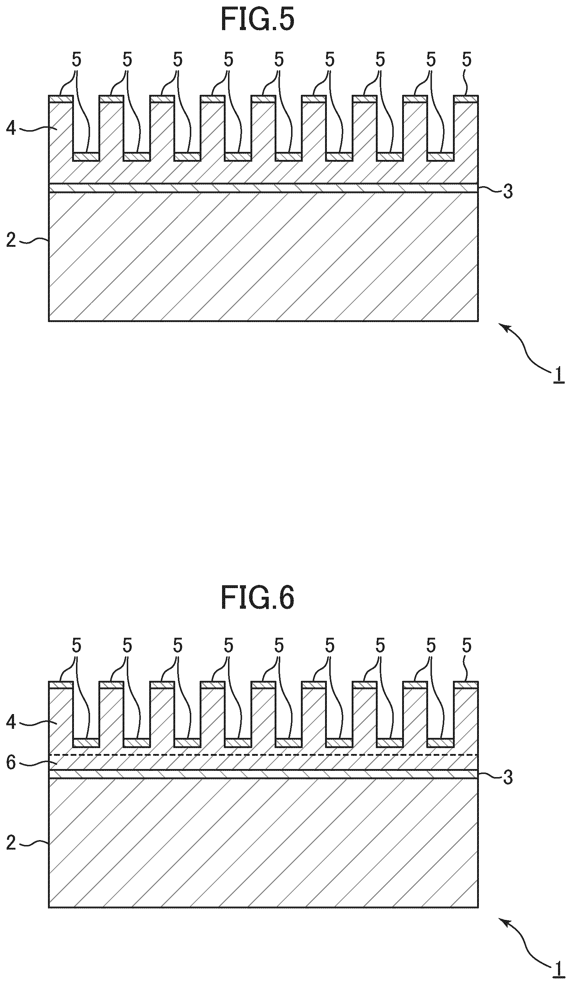

As already mentioned, it is not a requirement to laminate each layer on both surface sides of the base material 2 as shown in Figs. 1 to 4, and each layer may also be laminated on only one surface side of the base material 2 as shown in Figs. 5 to 8. Moreover, a layer structure may also be formed where the front surface side and the back surface side of the base material 2 differ, for example by laminating each layer shown in Fig. 5 on the surface of one side of the base material 2 and laminating each layer shown in Fig. 6 on the surface of the other side of the base material 2.

It is sufficient for each of the thicknesses of the oxide layer 3, dense layer 6, first conductive layer 4, mixed layer 7 and second conductive layer 5 to be approximately 0.005 µm or more and 1 µm or less. When the total thickness of each layer excluding the base material 2 is 0.05 µm or more on one surface side of the base material 2, a cathode foil with good properties is obtained. However, each layer may be formed to be thicker or thinner. The thickness of each of the layers of Figs. 1 to 8 is merely one example, and the thickness of each layer may be determined as desired.

Defining the actual surface area of the electrode material 1 by the BET specific surface area method of adsorbing nitrogen gas or krypton gas is crucial as an index of the retentivity of the solid electrolyte and electrolytic solution. In an embodiment of the present invention, taking precedence of this, evaluation was performed by the cyclic voltammetry method in order to obtain an electrochemically effective surface area together with the ease of electricity flow such as an interfacial resistance which is crucial when being made into an actual capacitor. An index relating to the electrochemically effective surface area was obtained by: performing a linear sweep on the voltage under the conditions of 1M of tetraethyl ammonium hexafluorophosphate using a solvent of propylene carbonate as the electrolytic solution, a Pt electrode as a reference electrode, stainless steel as a counter electrode, an electrolytic solution at a temperature of 30°C, a sweep range being ±0.3 V vs Pt electrode, and a sweep rate being 500 mV/sec; and comparing the maximum value of an electric current value of a cyclic voltammogram measured when the electrode material in an embodiment of the present invention was used as the working electrode, with the maximum value of an electric current value measured when the smooth base material was used as the working electrode. Moreover, when the electrode material in an embodiment of the present invention is used as the working electrode, it is preferable to determine the maximum value of an electric current value to be 6.5 times or more of the maximum value of an electric current value when the smooth base material is used as the working electrode. By means of the electrode material used as the working electrode, exhibiting the maximum value being 6.5 times of that of the smooth material used as the working electrode, an ESR reducing effect can be obtained due to the improved retention power of the solid electrolyte and the electrolytic solution.

As the evaluation method in relation to the bonds of metal elemental atoms and carbon atoms constituting the first conductive layer, analysis on the amounts of each element present in the depth direction, as well as the bond states can be performed by means of XPS. By repeating etching and measurement for every several nm, the ratio of the amount of bonds present of metal elemental atoms and carbon atoms constituting the first conductive layer can be analyzed with respect to the total amount of all bonds present of which detected carbon atoms are involved. Thus, a low resistance conductor is obtained when this ratio is 5% or more and an ESR reducing effect can be obtained, and hence the ratio of the amount of bonds present of metal elemental atoms and carbon atoms constituting the first conductive layer is preferably 5% or more, with respect to the total amount of all bonds present of which detected carbon atoms are involved.

Moreover, when an electrode material in an embodiment of the present invention using a valve action metal as the base material 2, is used as a cathode foil of an electrolytic capacitor, when an electric current flows by electrochemical polarization within a range of an electric current density of a leakage current of an electrolytic capacitor, a potential corresponding to this electric current may be on a higher side than a natural immersion potential of a reference cathode foil having a purity of 99.99% or more and with the same type of valve action metal used in the base material 2. Moreover, the natural immersion potential when immersed in an electrolytic solution may be on a higher side than a natural immersion potential when a reference cathode foil having a purity of 99.99% or more with the same type of valve action metal used in base material 2 was immersed in the same electrolytic solution (Patent Literature 26 and Patent Literature 27). Thereby, when a dielectric material oxide film formed at an anode foil is repaired by a leakage current, the generation of hydrogen gas at the cathode side can be suppressed. To further explain this point, a natural oxide film is formed at the aforementioned reference cathode foil, which has a natural immersion potential in which the cathode reaction which reduces the hydrogen ions dominantly occurs. Moreover, the cathode foil in an embodiment of the present invention has a natural immersion potential on the higher side than the aforementioned reference cathode foil. Thus, when the cathode foil in an embodiment of the present invention is incorporated in an electrolytic capacitor and a leakage current also occurs, the potential of the cathode foil in an embodiment of the present invention can be maintained on a higher side than the natural immersion potential of the aforementioned reference cathode foil. Thus, the potential in a cathode foil in an embodiment of the present invention when a leakage current occurs in an electrolytic capacitor, is within the range of the potential in which the cathode reaction which reduces dissolved oxygen dominantly occurs, and a cathode reaction which reduces hydrogen ions is suppressed. As a result, the raising of the inner pressure of the electrolytic capacitor caused by the generation of hydrogen gas can be suppressed, and hence the risk that a case which houses the capacitor element expands, can be reduced.

As mentioned above, the BET specific surface area method of adsorbing nitrogen gas or krypton gas can be mentioned as a method to obtain the actual surface area required in order for an inorganic conductive layer, containing the first conductive layer and the second conductive layer and having an uneven portion on the surface layer side, to retain a solid electrolyte and an electrolytic solution. Within this, when krypton gas with a saturated vapor pressure lower than that of nitrogen gas is used as the adsorption gas, a high precision measurement is enabled even in a region with a small specific surface area. The surface expansion magnification calculated from a BET specific surface area using krypton gas as the adsorption gas (BET specific surface area of the electrode material / BET specific surface area of the smooth base material) is preferably determined to be 1.5 or more. By determining this surface expansion magnification to be 1.5 times or more, the retentivity of a solid electrolyte and an electrolytic solution is further improved, and a further ESR reducing effect can be obtained. The surface area may be further increased by further thickening the first conductive layer; however, making this to be too thick will result in the reduced volume efficiency of the capacitor, and increased manufacturing costs. Thus, it is more preferable to determine the surface expansion magnification calculated from a BET specific surface area obtained using krypton gas as the adsorption gas to be 1.5 times or more and 200 times or less.

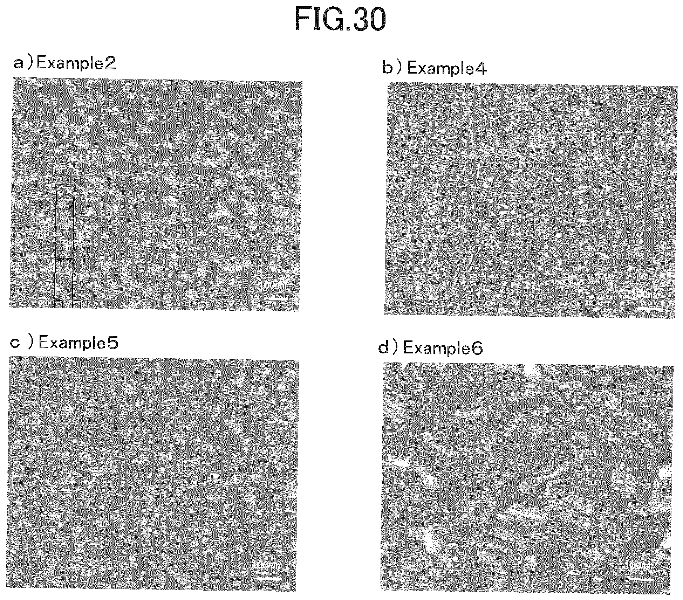

Figs. 30 a) to d) are scanning electron microscope (SEM) surface photographs in relation to the cathode foils of Examples 2, 4, 5 and 6. Here, images that look like particulate shapes are observed in the SEM photographs, these are projecting parts in an uneven portion on a surface on the surface layer side, namely on a surface layer side of an inorganic conductive layer, of the electrode material. As mentioned above, the electrode material 1 has the oxide layer 3, the first conductive layer 4, the mixed layer 7 and the second conductive layer 5 formed in this order on the smooth base material 2, in which there is an uneven portion on the surface layer side of the first conductive layer 4. Moreover, in Examples 2, 4, 5 and 6, the first conductive layer is a particle deposition layer formed by vapor deposition, and thereon the mixed layer and the second conductive layer are formed; however, both the mixed layer and the second conductive layer are thin. Thus, when observing the surface of the cathode foil of each of the Examples by SEM, it seems as if a sample is observed where only the first conductive layer which is a particle deposition layer is formed, as in Fig. 30 a) to d). In other words, every single particle observed in the SEM surface photographs is corresponding to every single projecting part of the inorganic conductive layer. Thus, in Examples 2, 4, 5 and 6, the particle diameter of the particles observed in the SEM surface photographs is regarded as the diameter of a projecting part of an uneven portion on the surface layer side of an inorganic conductive layer. Specifically, the surfaces of the cathode foils of the Examples were observed with an observation magnification of 100,000 times using a JSM-7401F scanning electron microscope manufactured by JEOL Ltd., the Feret diameters of the particles present in the observation field at this time were measured, and the Feret diameters thereof were regarded as the diameters of the projecting parts. A Feret diameter here, as shown in Fig. 30 a), is a distance between the left side tangent and the right side tangent of a particle parallel to the vertical direction in the field with respect to a particle. If the diameter of this projecting part is too large, the surface area of the uneven portion of the front surface of the surface layer side in the electrode material is too small, and a geometrical structure necessary to retain a solid electrolyte and an electrolytic solution cannot be obtained. Thus, the mean diameter of a projecting part in an uneven portion on the surface layer side of an inorganic conductive layer is preferably determined to be 210 nm or less. The mean diameter here is the average of the Feret diameters measured for 50 particles (projecting parts) present in the observation field. However, when the number of particles is less than 50 in a single field, other fields are further measured until the number of particles achieves 50.

### Electrolytic capacitor of the present invention

A solid electrolytic capacitor and a hybrid capacitor will be explained below as examples of an electrolytic capacitor which can be prepared using the cathode foil of the present invention. Here, the case in which the cathode foil 1 having the layer structure of Figs. 1 to 4 in which each layer is laminated on both surface sides of the base material 2 is used will be explained; however, an electrolytic capacitor of the present invention can also be prepared using a cathode foil 1 having a layer structure in which each layer is laminated on only one surface side of the base material 2.

### (Solid Electrolytic Capacitor)

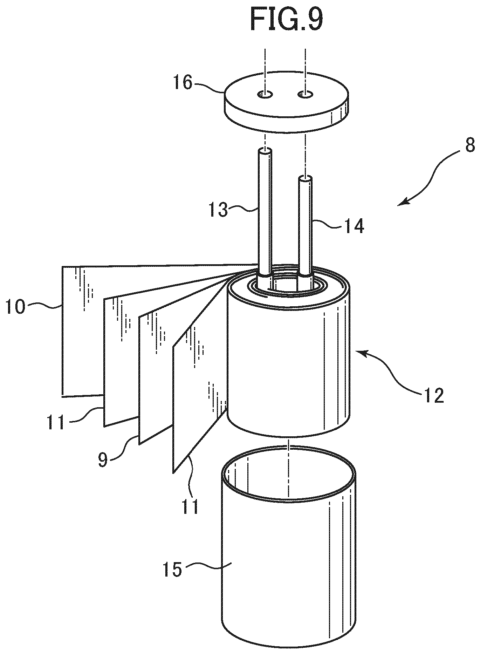

Fig. 9 is an exploded view of a winding type solid electrolytic capacitor 8 prepared using the cathode foil 1 having any of the layer structures shown in the above Figs. 1 to 4. The solid electrolytic capacitor 8 is prepared by a method including the following.
(i) An anode foil 9 with an oxide film formed by means of an anodic oxidation treatment on an anode aluminum foil and a cathode foil 10 having any of the layer structures shown in Figs. 1 to 4 are overlapped via a separator paper 11 in between, an anode terminal 13 is connected to the anode foil 9 and a cathode terminal 14 is connected to the cathode foil 10, and this is then wound to prepare a capacitor element 12.
(ii) The capacitor element 12 is immersed in a mixed solution of 3,4-ethylene dioxythiophene containing n-butyl alcohol as a diluent, and p- toluene sulfonic acid iron (II) as an oxidizing agent, which is then heated and is thermally polymerized to form a solid electrolyte layer of polyethylene dioxythiophene (PEDOT). Alternatively, a solid electrolyte layer may also be formed by immersion and impregnation into a PEDOT/PSS aqueous dispersion solution obtained by mixing the polyethylene dioxythiophene with polystyrene sulfonic acid (PSS) in order to disperse the polyethylene dioxythiophene in the aqueous solution, followed by drying.
(iii) The capacitor element 12 in which the solid electrolyte layer is formed is housed in an aluminum case 15 and sealed with a sealing rubber 16.

A solid electrolyte layer may also be formed using a polypyrrole-based or polyaniline-based, polyacene-based, polyparaphenylene vinylene-based or polyisothianaphthene-based etc. electroconductive polymer, or using manganese dioxide (MnO₂), TCNQ (tetracyanoquinodimethane) complex salt, etc.

### (Hybrid Capacitor)

The hybrid capacitor, after performing the steps (i) and (ii) similarly to the case of preparing the solid electrolytic capacitor 8, is prepared by a method including the following.
(ii-2) An electrolytic solution containing as a solvent at least one of γ-butyl lactone, ethylene glycol and water is impregnated in the capacitor element in which the solid electrolyte layer is formed.
(iii) The capacitor element in which the solid electrolyte layer is formed and an electrolytic solution is impregnated is housed in an aluminum case and sealed with a sealing rubber.

A solid electrolyte layer may also be formed using a polypyrrole-based or polyaniline-based, polyacene-based, polyparaphenylene vinylene-based, polyisothianaphthene-based etc. electroconductive polymer, or using manganese dioxide (MnO₂), TCNQ (tetracyanoquinodimethane) complex salt, etc.

### Examples

A variety of cathode foils prepared as examples of the present invention, electrolytic capacitor structures, analytical results, performance test results etc. will be explained below.

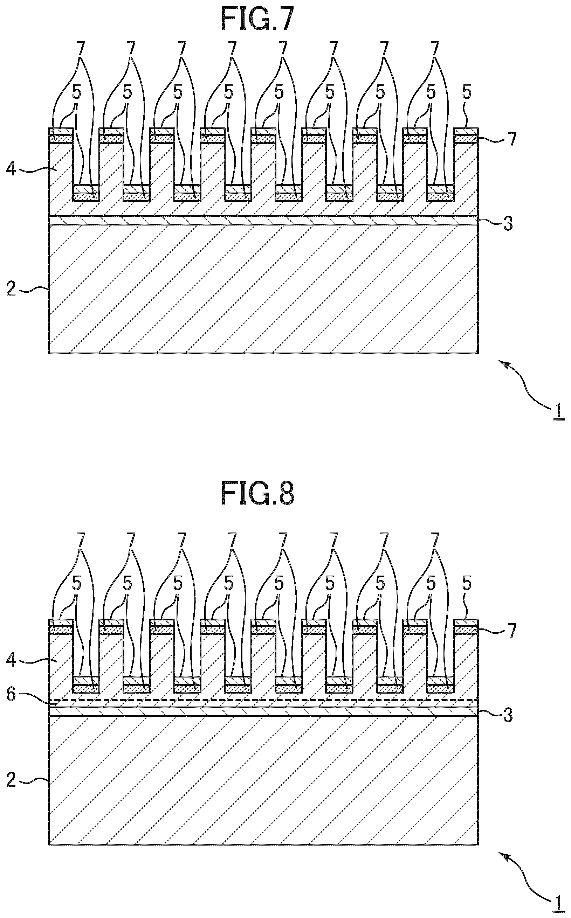

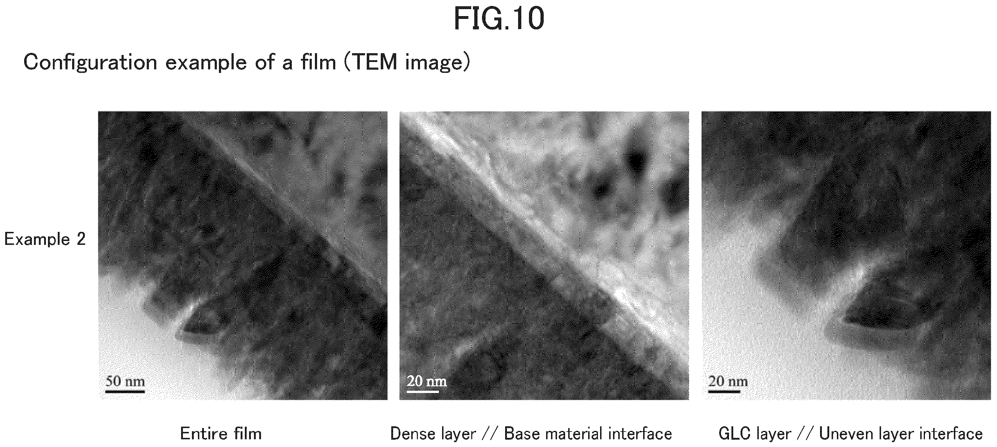

Fig. 10 is a TEM (transmission electron microscope) photograph (cross-sectional image) of a cathode foil utilizing an electrode material (Example 2 mentioned below), which is an embodiment of the present invention. The cathode foil of Fig. 10 has the layer structure (it is considered that a natural oxide film is formed between a smooth base material and a dense layer) shown in Fig. 8 (the layer structure on one surface side shown in Fig. 4). This is prepared by: forming a dense layer 6 of Ti on an aluminum smooth base material 2 (on which a natural oxide film 3 is formed) by the arc ion plating method; forming a first conductive layer 4 of Ti by the vacuum deposition method; and forming a GLC carbon layer (second conductive layer 5) by the arc ion plating method. Such cathode foils have the following advantages.
· By utilizing a smooth base material as the base material 2, the Al surface can be coated with Ti without gaps.
· By employing a particulate deposition structure, a polymer and an electrolytic solution can be adhered and retained.
· Ti pre-treatment by means of the arc ion plating method can eliminate the effects of remaining oil and oxide on the base material surface.

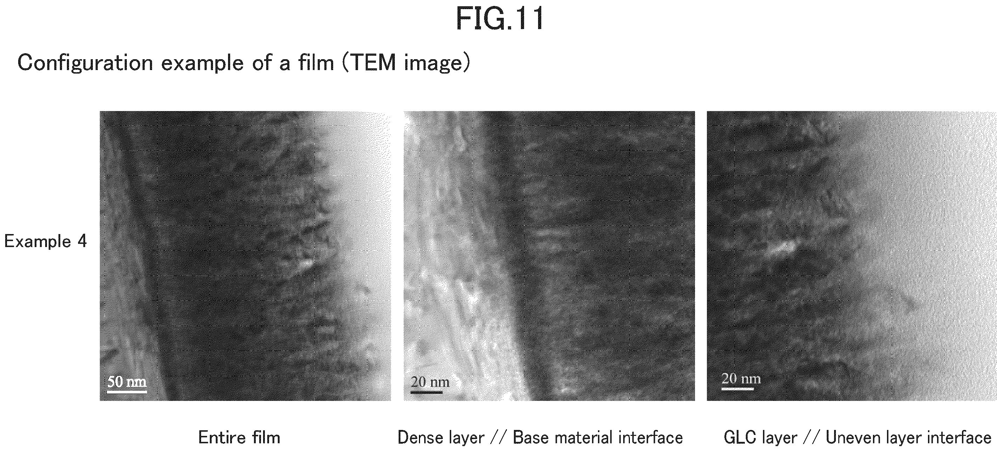

In addition, Fig. 11 shows a TEM photograph (cross-sectional image) of another cathode foil (Example 4 mentioned below) different from the cathode foil shown in Fig. 10. The cathode foil shown in Fig. 10 and Fig. 11 are closely similar in that both prepared by: forming a dense layer 6 of Ti on the aluminum smooth base material 2 (on which a natural oxide film 3 is formed) by the arc ion plating method; forming a first conductive layer 4 of Ti by the vacuum deposition method; and forming a carbon layer of GLC (second conductive layer 5) by the arc ion plating method. However, the particle diameters of the metal material (Ti in the samples of Fig. 10 and Fig. 11) contained in the first conductive layer 4 differ from each other, and therefore the granularity of the unevenness in the first conductive layer 4 differs from each other.

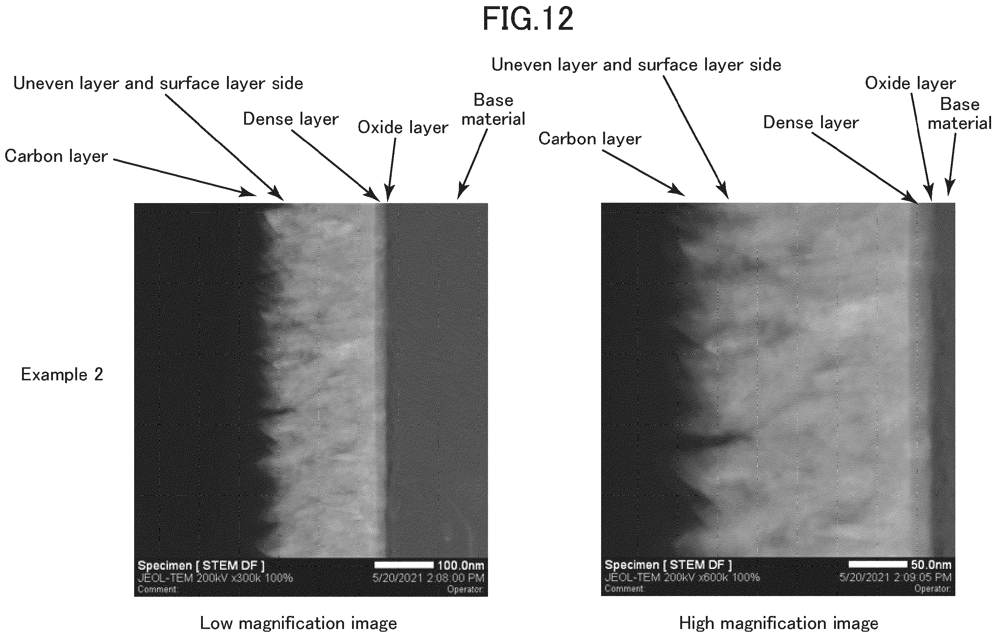

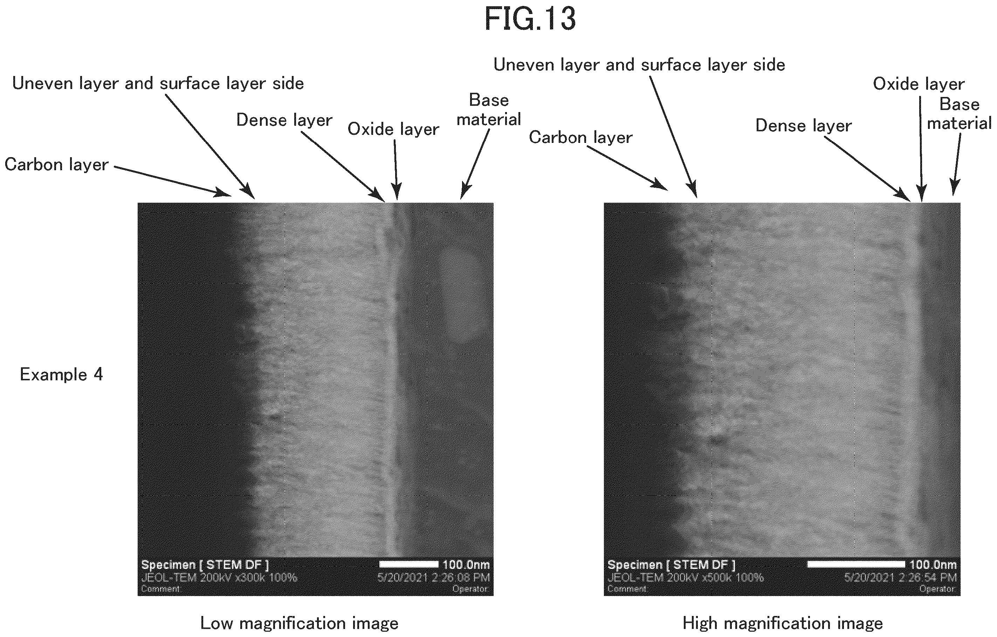

Fig. 12 is a STEM (scanning transmission electron microscope) photograph (cross-sectional image) of the same cathode foil as that of Fig. 10 (Example 2), and Fig. 13 is a STEM photograph (cross-sectional image) of the same cathode foil as that of Fig. 11 (Example 4). As mentioned above, because the particle diameter of the metallic material in the first conductive layer 4 can be suitably controlled in the vapor deposition by, e.g., adjusting the conditions such as the type of gas to be introduced, the degree of vacuum, the temperature of the base material etc., the first conductive layer 4 can be formed with a variety of particle diameters, namely a variety of uneven granularities.

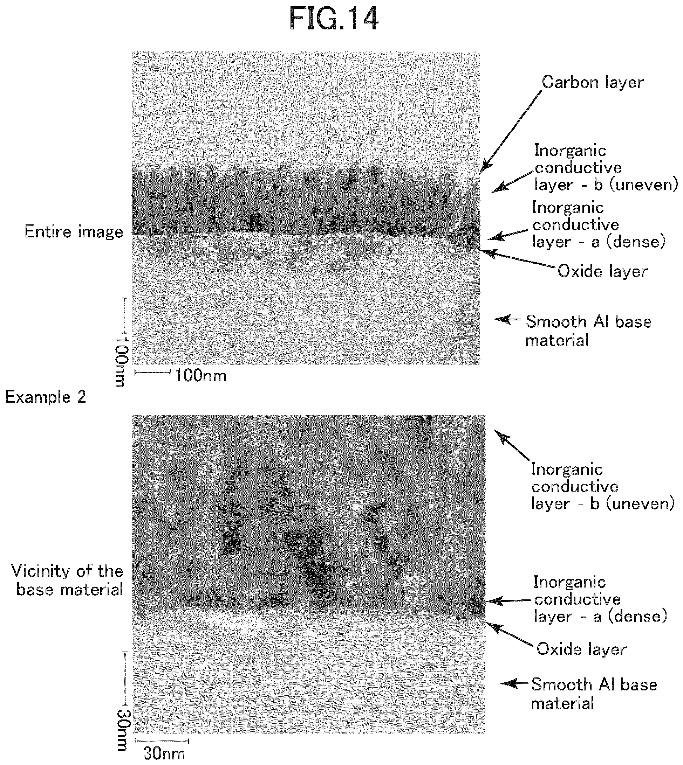

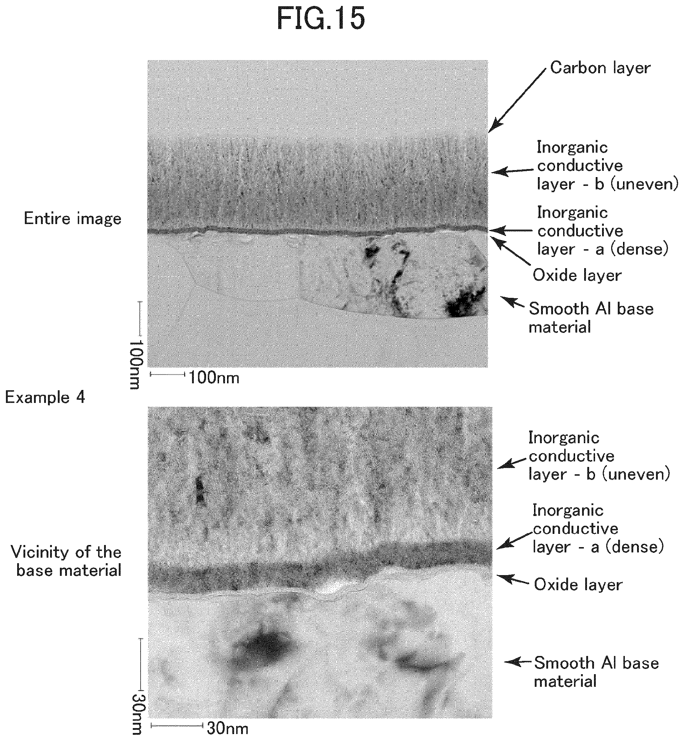

Fig. 14 is a TEM photograph (bright field image, cross-sectional image) of the same cathode foil as that of Fig. 10 (Example 2), and Fig. 15 is a TEM photograph (bright field image, cross-sectional image) of the same cathode foil as that of Fig. 11 (Example 4). A natural oxide film (approximately several nm) on the base material can also be distinguished in the samples in both Example 2 and Example 4.

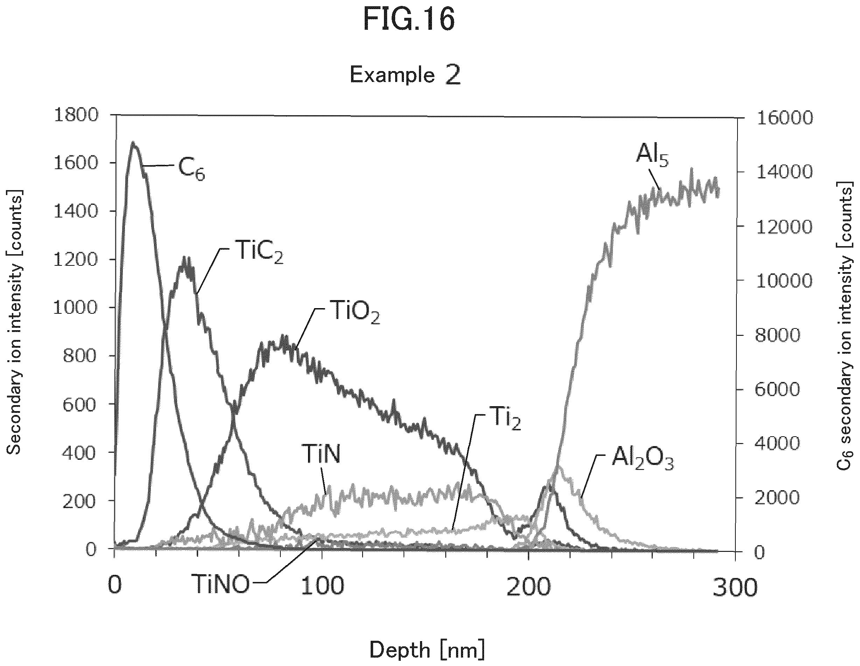

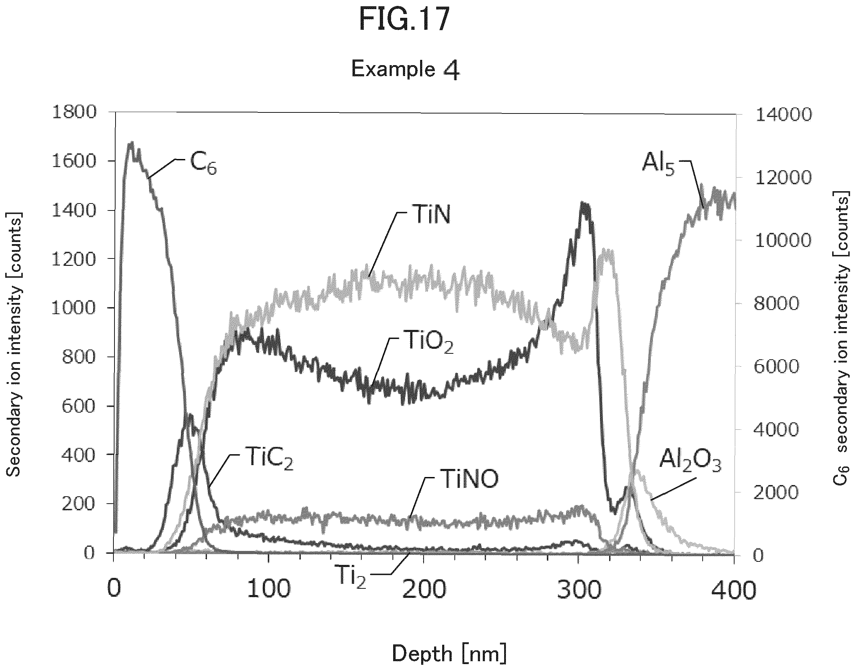

Fig. 16 is a graph showing the analytical results of the same cathode foil as that of Fig. 10 (Example 2) by means of ToF-SIMS (time-of-flight secondary ion mass spectrometry) (showing a profile distribution of the chemical bond states), and Fig. 17 is a graph showing the analytical results of the same cathode foil as that of Fig. 11 (Example 4) by means of ToF-SIMS (showing a profile distribution of the chemical bond states). In the graphs of Fig. 16 and Fig. 17, the longitudinal axis expresses the secondary ion intensity, where the unit thereof is [counts] which expresses the number of each of secondary ion detected in each measurement depth point. In the graphs of Fig. 16 and Fig. 17, the carbon C₆ derived from carbon vapor deposition is a fragment ion consisting of six C atoms which is a monovalent negative ion, the metal titanium Ti₂ ion is a monovalent negative ion consisting of two Ti atoms, and the metal aluminum (base metal) Al₅ ion is a monovalent negative ion consisting of five Al atoms. In addition, TiC₂ / TiO₂ / TiN / TiNO / Al₂O₃ etc. are negative ions of each of these in the molecular bond states. For example, in Example 4 shown in Fig. 17, it is understood that few metal Ti were present at a base material interface, where most of these were likely present as a carbide / oxide / nitride / oxynitride. Moreover, in both the samples of Example 2 and Example 4, it is understood that a mixed layer of an oxide and Ti compound, or a mixed layer of a Ti compound and C were each formed on an aluminum base material, and that a mixed layer was formed as a gradient film in which the ratio of C increases upon heading towards the outermost layer (carbon layer).

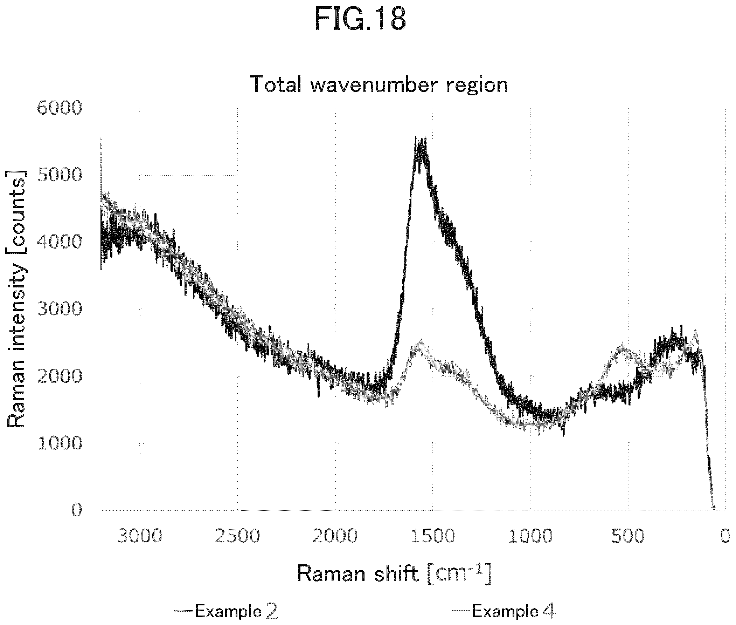

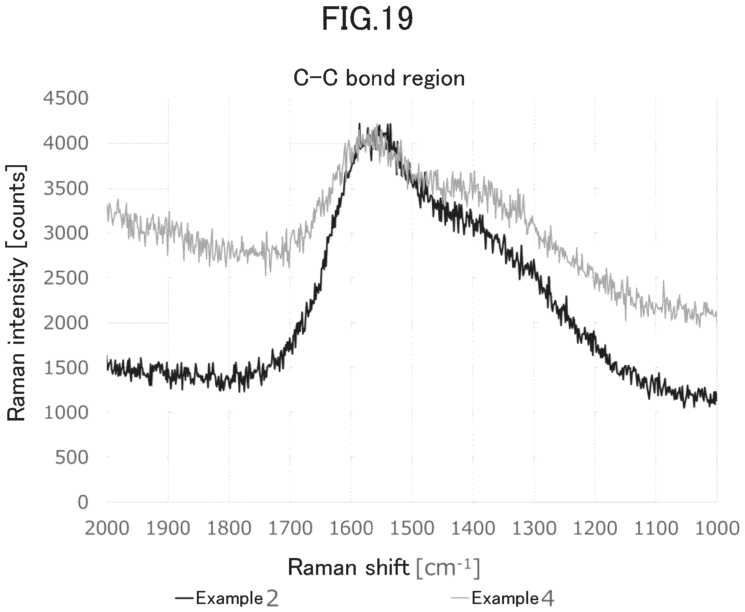

Fig. 18 is a graph of a Raman scattering spectrum obtained by laser microscope Raman spectroscopy analysis (total wavenumber region) of a cathode foil as a sample prepared under the same conditions as those for the samples shown in Fig. 10 and Fig. 11. Fig. 19 is a graph of a Raman scattering spectrum obtained by laser microscope Raman spectroscopy analysis (C-C bond region) of a cathode foil as a sample prepared under the same conditions as those for the samples shown in Fig. 10 and Fig. 11. In the graph of Fig. 18, the graph where a Raman intensity [counts] of the longitudinal axis is larger at a Raman shift of the lateral axis being in the vicinity of 1500 cm⁻¹ corresponds to the sample of Example 2, and the graph where a Raman intensity [counts] of the longitudinal axis is smaller at a Raman shift of the lateral axis being in the vicinity of 1500 cm⁻¹ corresponds to the sample of Example 4. In the graph of Fig. 19, the graph where a Raman intensity [counts] of the longitudinal axis is smaller at a Raman shift being in the vicinity of 1100 cm⁻¹ corresponds to the sample of Example 2, and the graph where a Raman intensity [counts] of the longitudinal axis is larger at a Raman shift of the lateral axis being in the vicinity of 1100 cm⁻¹ corresponds to the sample of Example 4. From the graph shown in Fig. 19 in particular, it is understood that the Raman intensity at sp² (G band) was higher than the Raman intensity at sp³ (D band) in both the samples of Example 2 and Example 4, and that a carbon layer (the second conductive layer) containing GLC was formed in both samples.

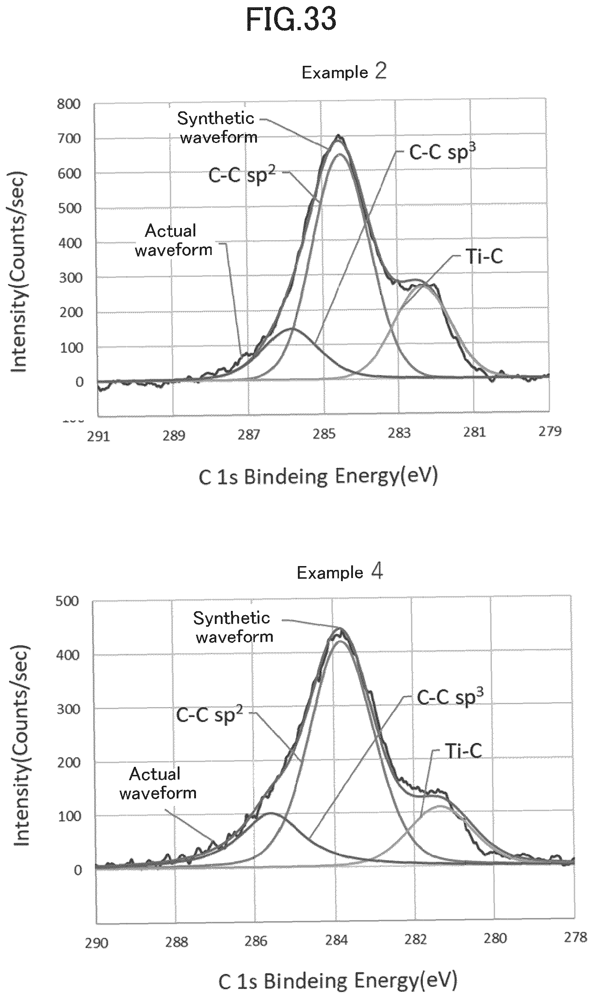

Fig. 33 is a spectrum obtained by XPS in which the cathode foils prepared under the same conditions as those for the samples shown in Fig. 10 and Fig. 11 were scanned in a narrow range of 280 to 290 eV at a 36 nm etched point from the surface layer. When peak separation was performed on the peak caused by the C bond states observed in the vicinity of 280 to 290 eV, a peak caused by sp² appears in the vicinity of 284.5 eV, and a peak caused by sp³ appears in the vicinity of 285.5 eV. Thus, it is understood that the carbon layers in both samples of Example 2 and Example 4 had amorphous structures (non-crystalline structures) having both graphite and diamond bonds. Moreover, when comparing the peak areas, it is understood that the peak area of sp² was larger than that of sp³. Thus, it is understood not only from the laser microscope Raman spectroscopy analysis but also from the XPS that the carbon layers containing graphite-like carbon in which a ratio of graphite bonds exceeded 50% is formed in both samples.

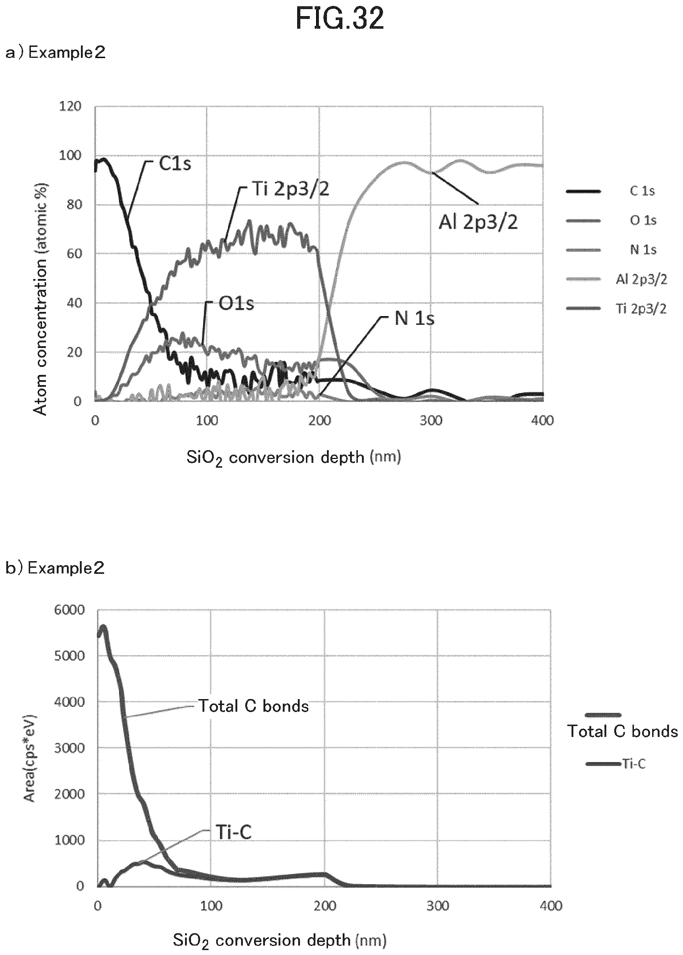

Fig. 32 a) is a graph showing the ratio of atoms present in the depth direction of the sample prepared under the same conditions as those for the sample shown in Fig. 10, obtained by XPS. By repeating etching and measurement from the surface layer in units of several nm, the amount of atoms present in the depth direction was shown as in Fig. 32 a). Fig. 32 b) is a graph which shows the total of all C bond states as well as the TiC bonds, when the peak separation caused by the C bond states was performed on the sample shown in Fig. 10 as in Fig. 33 until C could no longer be detected, where the horizontal axis indicates the SiO₂ conversion depth, and the longitudinal axis indicates the peak areas of each C bond state. (In the samples subject to analysis in Fig. 32, since the metal element constituting the first conductive layer was titanium, the 'TiC bond' fell under the 'bonds of metal elemental atoms and carbon atoms constituting the first conductive layer'.) Integral values were calculated for each curve, and the value resulting from dividing the amount of TiC bond states present (in the vicinity of 282 eV) by the total amount of C bond states present, was regarded as the ratio of TiC bonds present. Other metal carbides can be calculated from peaks such as e.g. the Al₄C₃ bond state (in the vicinity of 282.4 eV), TaC bond state (in the vicinity of 281.9 eV), NbC bond state (in the vicinity of 281.9 eV), VC bond state (in the vicinity of 282.5 eV), and WC bond state (in the vicinity of 283.0 eV).

### Performance test of the hybrid capacitor of the present invention

Each of the cathode foils of Examples 1 to 11 was prepared as a cathode foil in an embodiment of the present invention, and each of the cathode foils of Comparative Examples 1 to 3 was prepared as a cathode foil of the comparative example. Hybrid capacitors of Examples 1 to 11 were each prepared utilizing the cathode foils of Examples 1 to 11, and hybrid capacitors of Comparative Examples 1 to 3 were each prepared utilizing the cathode foil of Comparative Examples 1 to 3, and a performance test (ESR measurement) took place for each prepared hybrid capacitor. The preparation conditions and ESR measurement conditions of each hybrid capacitor were as follows.

Example 1: Ar gas was introduced into a chamber vessel which was vacuumed until 0.003 Pa; a smooth foil of aluminum was conveyed, in the order of a first target consisting of Ti material and a second target consisting of a graphite material, into a process in which the first and second targets were arranged next to each other, so that the vapor and ions of each vapor deposition material conically radiated from each of the first and second targets towards the base material have an overlap with (contact with) each other prior to arriving at the base material; an uneven Ti layer of 200 nm was provided by means of electron beam vapor deposition; and then a carbon film was formed by means of arc ion plating. By means of this continuous film forming by the roll-to-roll method, a mixed layer was respectively obtained at the interface between the oxide layer on the smooth base material and the first conductive layer, and at the interface between the first conductive layer and the second conductive layer (the mixed layer formed at the interface between the oxide layer and the first conductive layer was a mixed layer in which substances constituting the oxide layer and substances constituting the first conductive layer were present in a mixed state, and differed from the mixed layer in which the substances constituting the first conductive layer and the substances constituting the second conductive layer were present in a mixed state). Using the thus-obtained foil as a cathode, this was combined with an anode foil (an etched and formed aluminum foil anodically oxidized at 53 V) to prepare a hybrid capacitor. The initial ESR (100 kHz) was measured and left for 2000 hr (1 hr means 60 minutes) at 125°C, after which the ESR (100 kHz) was measured. A hybrid capacitor was prepared as follows. That is, an anode foil and the cathode foil prepared as described above were first overlapped via a separator paper in between, and then an anode terminal was connected to the anode foil and a cathode terminal was connected to the cathode foil. This was then wound to prepare a capacitor element. Next, a solid electrolyte layer was formed by immersing a capacitor element in a polymer dispersion solution of an aqueous solvent, in a vessel vacuumed until about 7000 Pa, and then drying it under an atmospheric environment of 150°C for 30 minutes. An electrolytic solution containing ethylene glycol as a solvent was further impregnated in the capacitor element, in a vessel vacuumed to about 5000 Pa. Finally, the capacitor element was housed in an aluminum case and sealed with a sealing rubber.

Example 2: Ar gas of the same amount as that of Example 1 was introduced into a chamber vessel vacuumed to 0.003 Pa, a smooth foil of aluminum was conveyed, and a Ti film of 10 nm was formed by means of arc ion plating. Afterwards, an aluminum foil in which the Ti layer was formed by arc ion plating was conveyed in the same film forming process as that of Example 1, an uneven Ti layer of 200 nm was provided by means of vapor deposition, and a carbon film was formed by means of arc ion plating. The process thereafter was the same as that of Example 1.

Example 3: Other than using a smooth base material subjected to an anodic oxidation treatment in an ammonium dihydrogen phosphate solution at an applied voltage being 5V, a treatment similar to that of Example 2 was performed.

Example 4: Other than introducing two types of gas (Ar and N₂), the same as described in Example 2 was performed.

Example 5: Other than employing the uneven Ti layer provided by means of vapor deposition having a thickness of 70 nm, the same as described in Example 2 was performed.

Example 6: Other than forming a film of Al instead of Ti by means of arc ion plating, and afterwards providing an uneven Al layer instead of an uneven Ti layer by means of vapor deposition, the conditions were the same as those of Example 2.

Example 7: The conditions were the same as those of Example 2, except that the amount of Ar gas introduced was 1/40 of that in Example 2.

Example 8: The conditions were the same as those of Example 6, except that the amount of Ar gas introduced was 1/10 of that in Example 6.

Example 9: Other than the uneven Ti layer provided by means of vapor deposition being configured as 30 nm, the conditions were the same as those of Example 2.

Example 10: Other than providing an Al layer instead of an uneven Ti layer by means of vapor deposition, the conditions were the same as those of Example 1.

Example 11: Other than gas introduced being N₂ gas only, the conditions were the same as those of Example 2.

Comparative Example 1: A smooth base material was used, the same amount of Ar gas as that of Examples 1 to 3 was introduced, a Ti film was formed by means of arc ion plating, then a carbon film was formed by arc ion plating, and this was utilized as a cathode. Otherwise, the conditions were the same as that of Example 1.

Comparative Example 2: An etched foil whose base material underwent anodic oxidation treatment at 2 V was utilized, the same amount of Ar gas as that of Examples 1 to 3 was introduced, a Ti film was formed by means of arc ion plating, then a carbon film was formed by arc ion plating, and this was utilized as a cathode. Otherwise, the conditions were the same as that of Example 1.

Comparative Example 3: No gas was introduced, a (dense) Ti layer was formed by vacuum vapor deposition on a smooth base material, then N₂ gas was introduced until the pressure in the vessel was equivalent to that of Examples 1 to 3, an (uneven) Ti layer was formed by means of vacuum vapor deposition, and this was utilized as a cathode. Otherwise, the conditions were the same as that of Example 1. The film constituents of the cathode foil of Comparative Example 3 were similar to those disclosed in JP 2014-022707 A.

In the cathode foils of Examples 1 to 11 and Comparative Examples 1 and 2 in which a carbon conductive layer was formed, a mixed layer was formed under the carbon conductive layer. Carbon and substances constituting the layer under the mixed layer were mixed and were present in the mixed layer. Moreover, the carbon layer in Examples 1 to 11, and Comparative Examples 1 and 2 contained GLC.

The electric current values of the cathode foils of the Examples and Comparative Examples were measured by means of the cyclic voltammetry method. The measurements took place under a nitrogen atmosphere employing a glove box. As the measuring liquid, 1M of tetraethyl ammonium hexafluorophosphate was prepared using propylene carbonate as a solvent. The three-electrode technique was employed in the measurement, using stainless steel as the counter electrode, Pt electrode as the reference electrode, and the cathode foils of the Examples and Comparative Examples as the working electrodes. The measurement conditions of the cyclic voltammetry were determined: a measuring liquid temperature being 30°C, sweep range being ±0.3 V, and sweep rate being 500 mV/sec. The electric currents and voltages from 1 to 5 cycles were recorded, the maximum values of the electric currents of each cycle were calculated, and the mean values thereof were regarded as the maximum electric current values of the cathode foils of the Examples and Comparative Examples. Similarly, the maximum electric current value for the smooth base material alone was also measured and using the thus-obtained maximum electric current value as 1, the maximum electric current values of the cathode foils of the Examples and Comparative Examples were indicated.

For the cathode foils of the Examples and Comparative Examples, etching and measurement were repeated by means of XPS in 2.5 nm units by SiO₂ conversion, and the bond states in the depth direction were observed. JPS-9010TR manufactured by JEOL Ltd., was employed as the XPS apparatus, and measurement was performed under the below conditions.
· X-ray source: AlKα, tube voltage: 10 kV, tube electric current: 10 mA, microanalysis: none, Dwell: 100 msec, flood gun: 3.0 V 4.0 mA
· Step: Wide range 1.0 eV / narrow range 0.05 eV
· Pass: Wide range 50 eV / narrow range 20 eV
· Scans: Wide range 1 / narrow range 2

Peak separation was performed on the peaks caused by the C bond states observed from the vicinity of 270 eV to the vicinity of 290 eV measured at a measurement range of 0.05 eV, and the peak areas were calculated for each C bond state. The integral values were calculated for the curves drawn when the horizontal axis expressed SiO₂ conversion depth, and the longitudinal axis expressed the peak areas of each C bond state, and this was regarded as the amount of C bond states present. The value resulting from dividing the amount of TiC bond states (in the vicinity of 282 eV) or Al₄C₃ bond states (in the vicinity of 282.4 eV) present by the total amount of C bond states present, was regarded as the ratio of bonds of metal elemental atoms and carbon atoms present in the cathode foils of Examples and Comparative Examples.

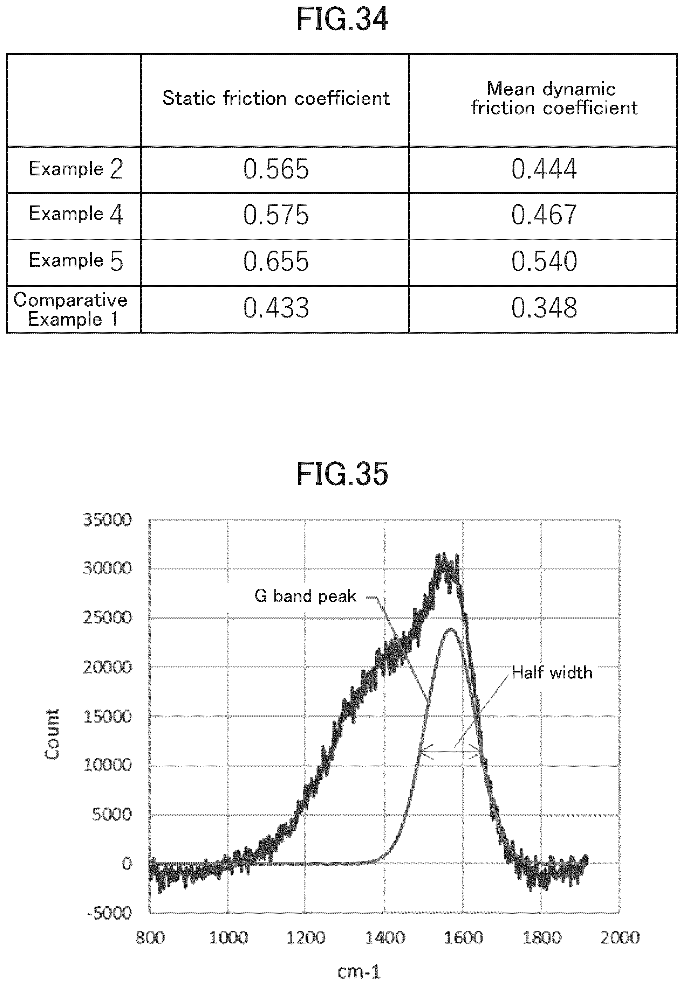

The half width of the sp² band (G band) peaks obtainable by separating the peak caused by the C-C bonds as measured by Raman spectroscopy was measured for the cathode foils of Examples and Comparative Examples. As one example, Fig. 35 is a spectrum of the sample shown in Fig. 10, caused by the C-C bonds as obtained by Raman spectroscopy. Peak separation was performed on this, and the half width of the G band peak was measured. In the measurement, the 'inVia Qontor' manufactured by Renishaw was used, a laser with a wavelength of 532 nm was irradiated, and a spectrum in the range of 100 to 3200 cm⁻¹ was used. The half width of crystal graphite was measured similarly, and using the thus-obtained half width regarded as 1, the magnification of the half width of each of Examples and Comparative Examples was indicated.

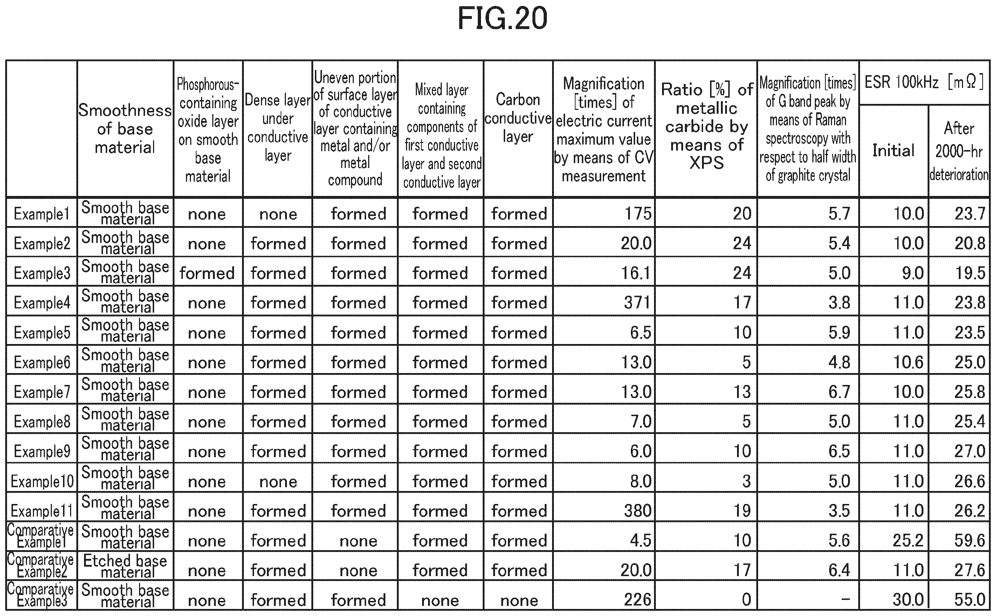

Fig. 20 is a table illustrating the results of ESR measurement performed on each of the hybrid capacitors of Examples 1 to 11, and the hybrid capacitors of Comparative Examples 1 to 3. In Fig. 20, the phrase 'after 2000-hr deterioration' indicates that the ESR measurement was performed on the hybrid capacitor after subjecting it to deterioration for 2000 hours under an atmospheric environment of 125°C. As is understood from the ESR measurement results of Fig. 20, firstly in the initial state, the ESRs of the hybrid capacitors of Examples 1 to 3, 6 and 7 were lower than the ESRs of the hybrid capacitors of Comparative Examples 1 to 3. Moreover, the ESRs of the hybrid capacitors of Examples 4, 5, 8 to 11 were lower than the ESRs of the hybrid capacitors of Comparative Examples 1 and 3 (the ESR of the hybrid capacitor of Comparative Example 2 was substantially equivalent). After the 2000-hr deterioration, the ESRs of the hybrid capacitors of Examples 1 to 11 were lower than the ESRs of the hybrid capacitors of Comparative Examples 1 to 3. Namely, both the initial ESR and the ESR after the 2000-hr deterioration of the hybrid capacitor could be reduced by using as a cathode foil, an electrode material formed in this order: an oxide layer on a smooth base material; a metal-containing first conductive layer; a mixed layer in which substances constituting the first conductive layer and substances constituting the second conductive layer were present in a mixed state; and then a carbon-containing second conductive layer, and having an uneven portion on the surface layer side of the first conductive layer. Comparative Example 1 was the same as Examples 1 to 11 in terms of forming on a smooth base material, an oxide layer, a metal-containing first conductive layer, a mixed layer in which substances constituting the first conductive layer and substances constituting the second conductive layer were present in a mixed state, and then a carbon-containing second conductive layer, in this order. However, unlike Examples 1 to 11, there was no uneven portion on the surface layer side of the first conductive layer. Thus, there was no geometrical structure suited to retain a solid electrolyte and electrolytic solution, and both the initial ESR and the ESR after the 2000-hr deterioration were higher. Comparative Example 2 was the same as Examples 1 to 11 in terms of forming on a base material, an oxide layer, a metal-containing first conductive layer, a mixed layer in which substances constituting the first conductive layer and substances constituting the second conductive layer were present in a mixed state, and then a carbon-containing second conductive layer, in this order. However, unlike Examples 1 to 11, Comparative Example 2 used an etched base material, not a smooth base material, as the base material. Thus, the entire base material surface (especially the inner walls of the etching pits) could not be coated during film forming, and hence ends up being partially exposed, and thus the ESR after the 2000-hur deterioration was higher. Comparative Example 3 was the same as Examples 1 to 11 in terms of forming, on a smooth base material, an oxide layer and a metal-containing first conductive layer in this order, and having an uneven portion on the surface layer side of the first conductive layer. However, unlike Examples 1 to 11, Comparative Example 3 had neither a mixed layer in which substances constituting the first conductive layer and substances constituting the second conductive layer were present in a mixed state nor a carbon-containing second conductive layer formed on the first conductive layer. Thus, the first conductive layer was in direct contact with the solid electrolyte, the interfacial resistance increased, and both the initial ESR and the ESR after the 2000-hr deterioration were higher.

Moreover, Fig. 20 also shows the measurement results by means of the cyclic voltammetry method, measurement results by means of XPS, and measurement results by means of Raman spectroscopy, in relation to the cathode foils of Examples 1 to 11 and the cathode foils of Comparative Examples 1 to 3. In Examples 1 to 11, initially, the ESR of the hybrid capacitor of Example 9 was nearly equivalent to the ESRs of the hybrid capacitors of Examples 1 to 8, 10 and 11; however, after the 2000-hr deterioration, the ESR of the hybrid capacitor of Example 9 was higher than the ESRs of the hybrid capacitors of Examples 1 to 8, 10 and 11. On this point, the magnification of the maximum electric current value by means of the cyclic voltammetry method was 6.5 times or more with the cathode foils of Examples 1 to 8, 10 and 11, whereas it was only 6.0 times with the cathode foil of Example 9. Thus, compared to the other examples, in Example 9, the electrochemically effective surface area together with the ease of electricity flow was insufficient, the ESR reducing effect due to improved retentivity of the solid electrolyte and the electrolytic solution was insufficiently exhibited, and the ESR after the 2000-hr deterioration was higher. Therefore, the magnification of the maximum electric current value by means of the cyclic voltammetry method is preferably 6.5 times or more.

For Examples 1 to 8, 10 and 11, initially, the ESR of the hybrid capacitor of Example 10 was substantially equivalent to the ESRs of the hybrid capacitors of Examples 1 to 8 and 11; however, after the 2000-hr deterioration, the ESR of the hybrid capacitor of Example 10 was higher than the ESRs of the hybrid capacitors of Examples 1 to 8 and 11. On this point, the ratio of metal carbide obtained by means of XPS was 5% or more with the cathode foils of Examples 1 to 8 and 11, whereas it was only 3% with the cathode foil of Example 10. Thus, in Example 10, compared to the other examples, the interfacial resistance increased due to the rapid changes of the component constituents of the electrode material in between a metal-containing first conductive layer and a carbon-containing second conductive layer could not be suppressed, and a sufficiently low resistance conductor could not be obtained; hence the ESR after the 2000-hr deterioration was higher with Example 10. Moreover, metal carbides detected by means of XPS also include those in the mixed layer. Therefore, it is more preferable that the magnification of the maximum electric current value by the cyclic voltammetry method is 6.5 times or more, and additionally that a mixed layer is further formed between the first conductive layer and the second conductive layer, and that the ratio of metal carbide obtained by XPS is 5% or more.

In Examples 1 to 8 and 11, initially, the ESR of the hybrid capacitor of Example 11 was nearly equivalent to the ESRs of the hybrid capacitors of Examples 1 to 8; however, after the 2000-hr deterioration, the ESR of the hybrid capacitor of Example 11 was higher than the ESRs of the hybrid capacitors of Examples 1 to 8. On this point, the magnification of the half width of the G band peak obtained by Raman spectroscopy was 3.8 times or more with the cathode foils of Examples 1 to 8, whereas it was only 3.5 times with the cathode foil of Example 11. Thus, in Example 11, compared to the other examples, the degree of the non-crystallinity of carbon was reduced and the deterioration resistance was worse, and the ESR after the 2000-hr deterioration was higher. Therefore, it is furthermore preferable that the magnification of the maximum electric current value obtained by the cyclic voltammetry method is 6.5 times or more, a mixed layer is formed between the first conductive layer and the second conductive layer, the ratio of metal carbide obtained by XPS is 5% or more, and in addition, the magnification of the half width of the G band peak obtained by Raman spectroscopy is 3.8 times or more.

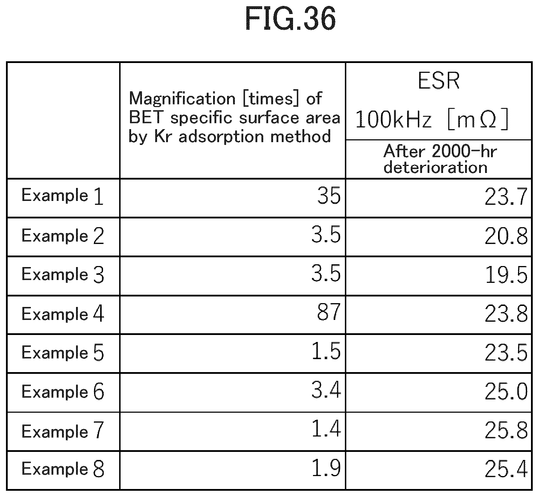

Fig. 36 shows the magnification (surface expansion magnification) of the BET specific surface area by means of the Kr adsorption method with respect to the smooth base material, as well as the ESR after the 2000-hr deterioration, concerning the cathode foils of Examples 1 to 8. The ESR after the 2000-hr deterioration was lower for Examples 1 to 6 and 8 whose surface expansion magnification by means of the Kr adsorption method was 1.5 times or more, than for Example 7 whose surface expansion magnification by means of the Kr adsorption method was 1.4 times. Therefore, it is particularly furthermore preferable that: the magnification of the maximum electric current value obtained by the cyclic voltammetry method is 6.5 times or more, a mixed layer is formed between the first conductive layer and the second conductive layer, the ratio of metal carbide obtained by XPS is 5% or more, the magnification of the half width of the G band peak obtained by Raman spectroscopy is 3.8 times or more, and in addition, the surface expansion magnification by means of Kr adsorption method is 1.5 times or more.

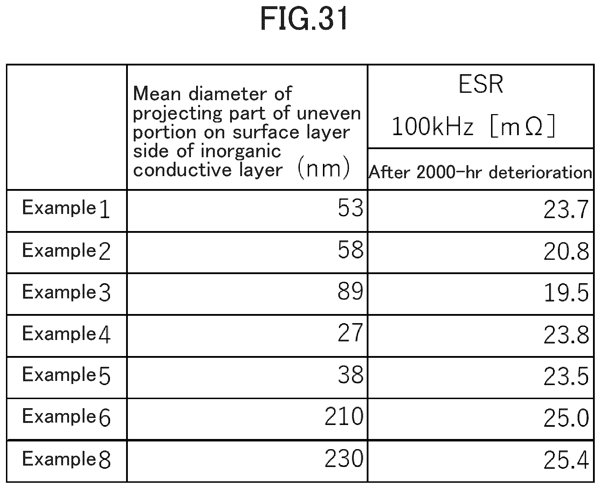

Fig. 31 shows the mean diameter of a projecting part of an uneven portion on the surface layer side of the inorganic conductive layer after providing the carbon conductive layer, and the ESR after the 2000-hr deterioration, in the cathode foils of Examples 1 to 6 and 8. In Examples 1 to 6 whose mean diameters were 210 nm or less, the ESRs after the 2000-hr deterioration were lower than that of Example 8 whose mean diameter was 230 nm. Therefore, it is particularly preferable that: the magnification of the maximum electric current value obtained by the cyclic voltammetry method is 6.5 times or more, a mixed layer is formed between the first conductive layer and the second conductive layer, the ratio of metal carbide obtained by XPS is 5% or more, the magnification of the half width of the G band peak obtained by Raman spectroscopy is 3.8 times or more, the surface expansion magnification by means of Kr adsorption method is 1.5 times or more, and in addition, the mean diameter of a projecting part of an uneven portion on the surface layer side of an inorganic conductive layer is 210 nm or less.

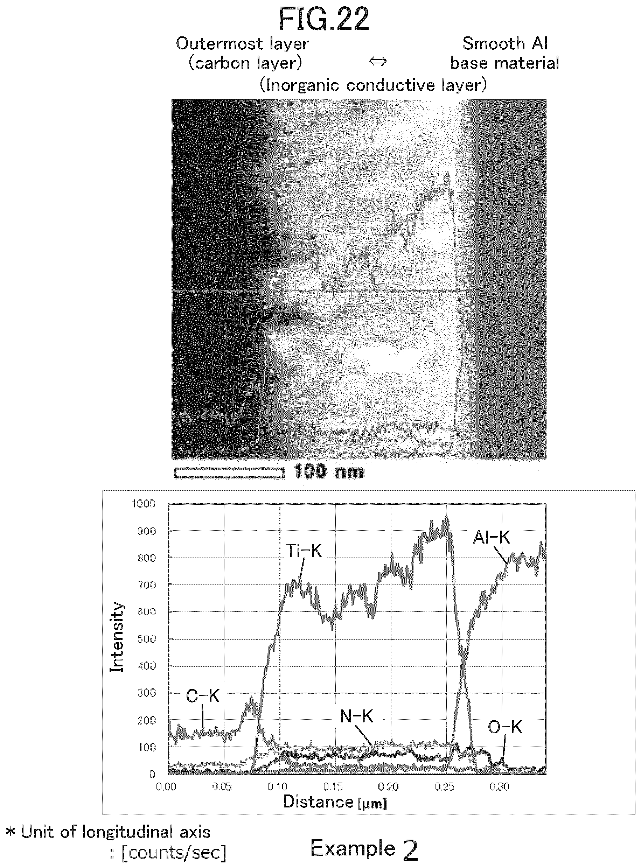

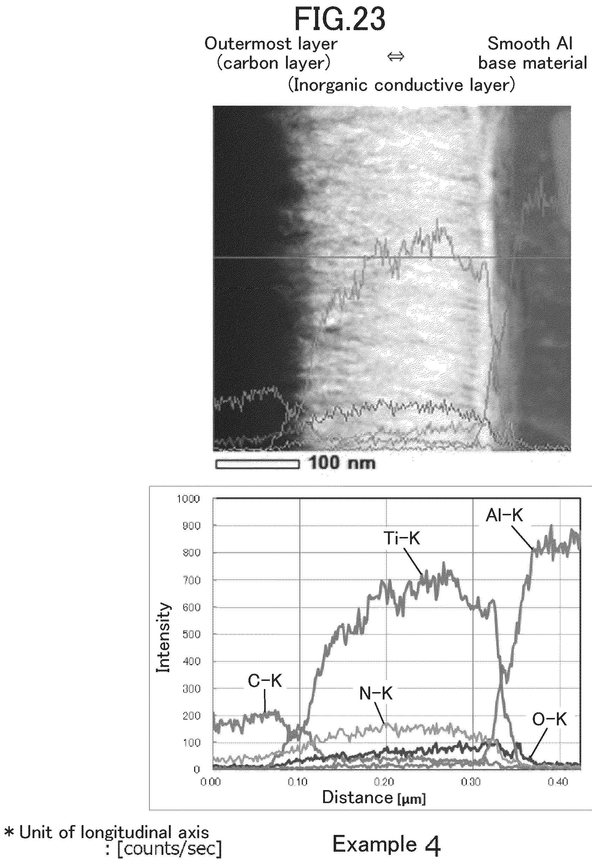

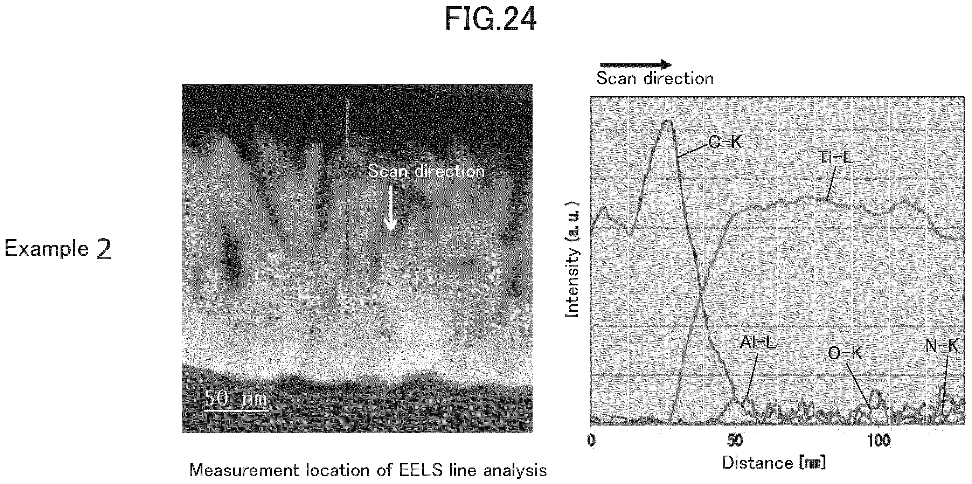

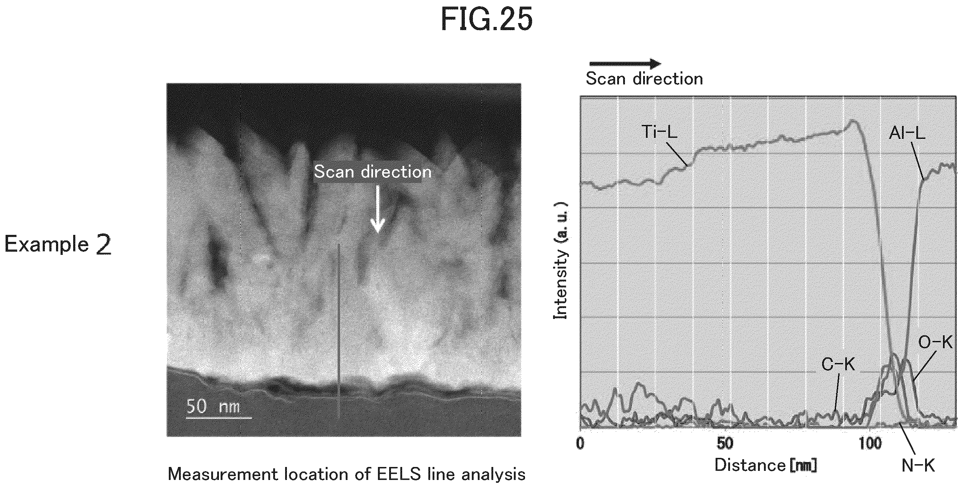

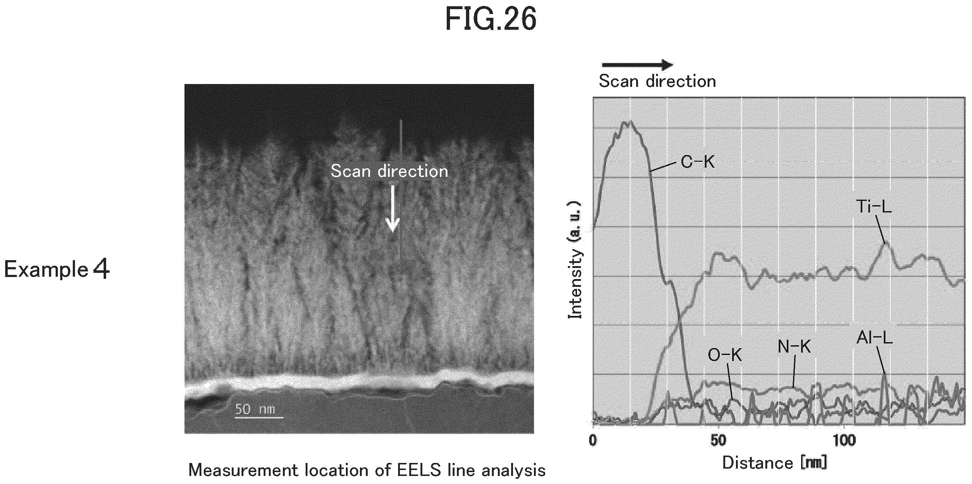

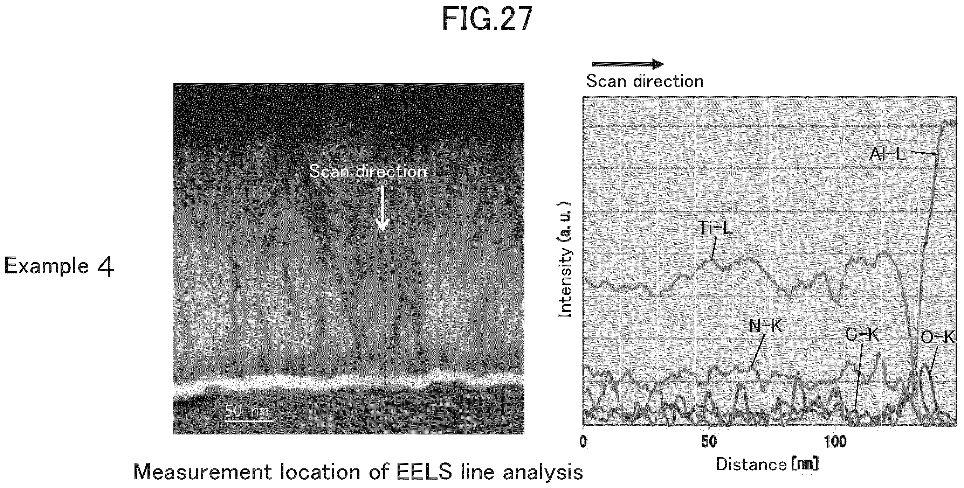

The below each relate to samples of ultra-thin pieces in the thickness direction of the entire film portion including the base material portion near the film. Fig. 22 is an elemental profile distribution of the same cathode foil as that of Fig. 10 (Example 2) obtained by TEM-EDS (transmission electron microscopy-energy dispersive X-ray spectroscopy), and Fig. 23 is an elemental profile distribution of the same cathode foil as that of Fig. 11 (Example 4) obtained by TEM-EDS. Fig. 24 is an elemental profile distribution of the same cathode foil as that of Fig. 10 (Example 2) obtained by STEM-EELS (scanning transmission electron microscopy - electron energy loss spectroscopy; more towards the carbon conductive layer side than in Fig. 25), and Fig. 25 is an elemental profile distribution of the same cathode foil as that of Fig. 10 (Example 2) obtained by STEM-EELS (more towards the base material side than in Fig. 24). Fig. 26 is an elemental profile distribution of the same cathode foil as that of Fig. 11 (Example 4) obtained by STEM-EELS (more towards the carbon conductive layer side than in Fig. 27), and Fig. 27 is an elemental profile distribution of the same cathode foil as that of Fig. 11 (Example 4) obtained by STEM-EELS (more towards the base material side than in Fig. 26). Here, in Figs. 22 to 27, K indicates the K shell of the electron shell. In Figs. 24 to 27, L indicates the L shell of the electron shell. In both Examples 2 and 4, it was understood that the mixed layer was present under the carbon conductive layer.

### Performance test of the solid electrolytic capacitor of the present invention

In addition, the solid electrolytic capacitors of Examples 1 to 11 and Comparative Examples 1 to 3 were each prepared using the cathode foils of the aforementioned Examples 1 to 11 and Comparative Examples 1 to 3 (compared to the preparation method of the hybrid capacitors of Examples 1 to 11 and Comparative Examples 1 to 3, these were prepared by a preparation method which was different only in that the treatment of impregnating an electrolytic solution in the capacitor element after forming the solid electrolyte layer was not performed). A performance test (ESR measurement) took place for each prepared solid electrolytic capacitor.

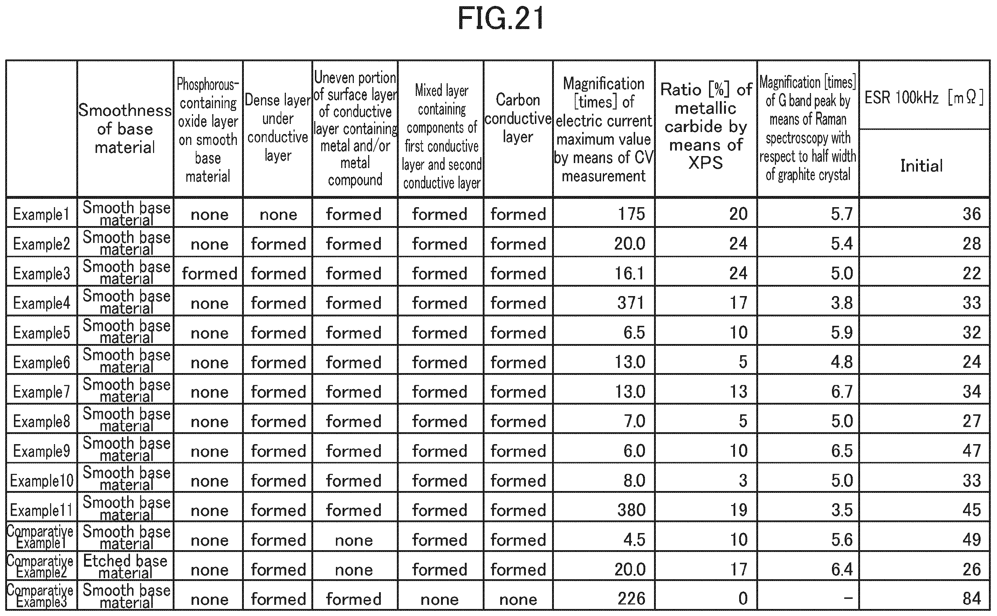

Fig. 21 is a table showing the results of ESR measurement performed respectively on the solid electrolytic capacitors of Examples 1 to 11, and the solid electrolytic capacitors of Comparative Examples 1 to 3. In the initial state, the ESRs of the solid electrolytic capacitors of Examples 1 to 11 were lower than the ESRs of the solid electrolytic capacitors of Comparative Examples 1 and 3.

### Evaluation of physical properties of the electrode material of the present invention

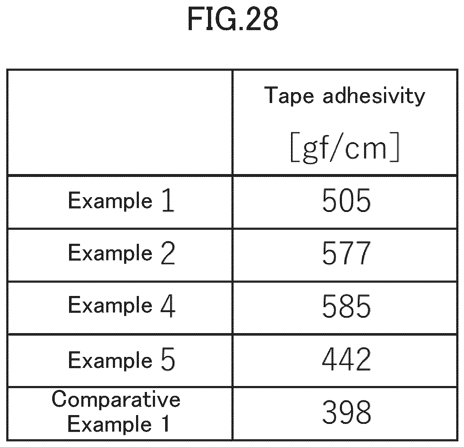

The adhering mechanism of the solid electrolyte and cathode foil was that of the sticky tape type, and Fig. 28 shows comparative data of adhesivity using industrial sticky tape. A polypropylene sticky tape with a width of 10 mm manufactured by Nitto Denko Corporation was used as the sticky tape, where this was cut into lengths of 15 cm. The adhesive surface was made to face downward and this was lightly placed in parallel in the length direction on the test pieces which were cut into a width of 50 mm × length of 200 mm. A press roller with a load of 20 N was made to reciprocate once on the tape by a length of not less than 100 mm, and the tape was thus adhered with a uniform load. One edge of a test piece was firmly pressed down with a clamp, the tape at the opposite side of the side where test piece was adhering was folded 180° in the vicinity of the clamp, and then the edge thereof was fixed with a clip connected to a push-pull gauge. This was pulled at a constant rate of 10 mm/second, and the mean values of the tensile load (gf/cm) when the tape peeled off were read, thereby the values were regarded as the tape adhesivity. In Examples 1, 2, 4 and 5, reflected an anchor adhering effect by means of the uneven structure provided on the surface layer side, very strong tape adhesivity was obtained, in contrast to Comparative Example 1 in which no uneven structure was provided on the surface layer side. In other words, it is understood that an effect of improved adhesion with a solid electrolyte can be obtained by means of the uneven structure provided on the surface layer side of the first conductive layer.

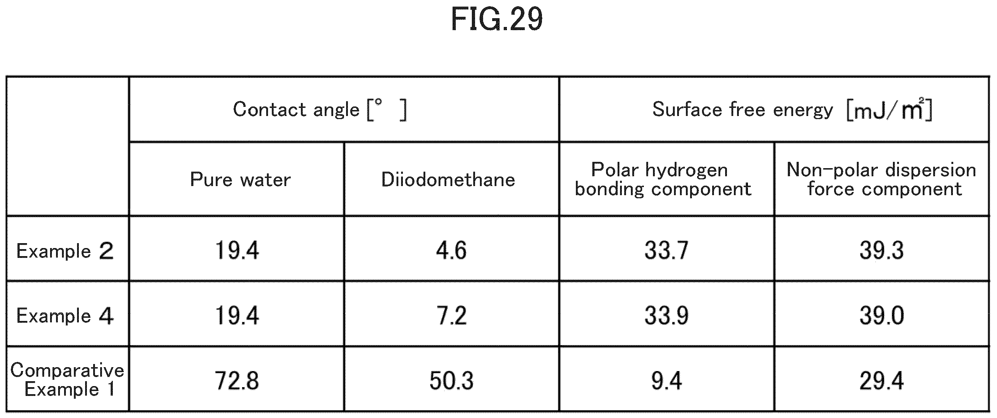

In the recent hybrid capacitors, from the viewpoints such as heat resistance, electroconductivity, voltage resistance performance and manufacturing costs, it is often the case that a solid electrolyte layer is formed by: immersion into an aqueous PEDOT/PSS dispersion solution mixed with polystyrene sulfonic acid (PSS) in order to disperse the polyethylene dioxythiophene (PEDOT) in the aqueous solution; and then drying after impregnation. It is considered that the adhesion and retentivity of the solid electrolyte is also dependent on the wettability and surface free energy of the cathode foil. Fig. 29 is the contact angles (°) with respect to each of water which was a solvent with high polarity, and diiodomethane (methylene iodide CH₂I₂) which was a solvent with low polarity, and a breakdown (polar hydrogen bonding component and non-polar dispersion force component) of the surface free energy (mJ/m²) calculated therefrom by means of the Owens and Wendt Model. The polar hydrogen bonding component is related to the affinity with an aqueous solvent, and the non-polar dispersion force component is related to the affinity with a hydrocarbon or an organic solvent, a polymer etc. One µL drops of each of the solvents of water and diiodomethane were dripped onto horizontally laid test pieces, and the contact angle of the drops after 60 seconds was measured using a contact angle meter (DM-501Hi) manufactured by Kyowa Interface Science Co Ltd. In contrast to Comparative Example 1 in which no uneven structure was provided on the surface layer side, very low contact angles (excellent wettability) were obtained for both solvents and a well-balanced and high surface free energy values were obtained for both components by means of the uneven structure provided on the surface layer side in Examples 2 and 4.

In a coil former element where a capacitor element is made by pinch winding and rolling a separator paper between each of the strip-shaped electrode foil pieces of the anode side and the cathode side, the type where winding begins with a winding axis pinching a cathode foil may be especially prone to the occurrence of a winding deviation malfunction. This is because when there is a small friction coefficient between the cathode foil in the vicinity of the winding axis and the separator paper contacting therewith, the cathode foil in contact with the winding axis ends up moving towards the extracting direction of the winding axis when extracting the winding axis after the coil former element formation, with insufficient grip force (friction force) of the cathode foil with the separator paper.

Fig. 34 is comparative data of the friction coefficient with a separator paper. The separator paper having a thickness of 40 µm and composed mainly of natural cellulose (RTZ3040) manufactured by Nippon Kodoshi Corporation was provided. This was plastered onto the back (side in contact with the foil sample) of a sliding piece of a flat plate made of SUS (projection dimension: 63 mm square shape) with a mass of 200 g connected to a load cell via a buffer spring with a flexible wire made of SUS, which was made to slide on the foil sample fixed flatly on a horizontally installed smooth acrylic plate with a thickness of 10 mm, in the horizontal direction at a constant speed of 100 mm/min, and the load at this time was sampled for every 60 milliseconds. Using the maximum load generated immediately after the sliding piece began to move as the maximum static friction force and the mean load in a stable moving state as the mean dynamic friction force, and dividing each by the normal force (1.96 N) of the sliding piece to obtain the static friction coefficient and the mean dynamic friction coefficient. In Examples 2, 4 and 5, friction force was increased by the uneven structure provided on the surface layer side of the first conductive layer, and it was observed that the static friction coefficient and the dynamic friction coefficient with the separator paper were both greatly increased in contrast to Comparative Example 1 in which no uneven structure was provided on the surface layer side. In other words, it is understood that by means of an uneven structure provided on the surface layer side of the first conductive layer, an effect of improved adhesion with a solid electrolyte is obtainable, and that a geometrical structure suited to retain a solid electrolyte and an electrolytic solution can be obtained.

### [Additional remarks]

The present disclosure discloses configurations as follows.

### [Configuration 1]

Electrode material, comprising:
an oxide layer on a smooth base material; and
further an inorganic conductive layer on the oxide layer,
wherein the inorganic conductive layer comprises a first conductive layer containing a metal and/or a metal compound, and a second conductive layer containing carbon,
wherein the first conductive layer comprises an uneven portion on the surface layer side thereof, and
wherein the second conductive layer is positioned at the outermost layer of the inorganic conductive layer.

### [Configuration 2]

Electrode material according to configuration 1, wherein the smooth base material and the first conductive layer are constituted from substances which differ from each other.

### [Configuration 3]

Electrode material according to configuration 1 or 2, wherein the second conductive layer consists substantially of carbon.

### [Configuration 4]

Electrode material according to any one of configurations 1 to 3, wherein the inorganic conductive layer further comprises a dense layer in which the metal and/or the metal compound is densely present, and the dense layer is formed between the oxide layer and the first conductive layer.

### [Configuration 5]

Electrode material according to any one of configurations 1 to 4, wherein in the inorganic conductive layer, both the first conductive layer and the second conductive layer, or at least the first conductive layer consists of a particle deposition layer, and wherein the first conductive layer contains at least one kind of titanium, aluminum, a nitride thereof, an oxide thereof, an oxynitride thereof, a carbide thereof, and a carbonitride thereof.

### [Configuration 6]

Electrode material according to any one of configurations 1 to 5, wherein the oxide layer is a phosphorous-containing oxide layer.

### [Configuration 7]

Electrode material according to any one of configurations 1 to 6, wherein the smooth base material contains aluminum or an aluminum alloy.

### [Configuration 8]

Electrode material according to any one of configurations 1 to 7, wherein a maximum value of an electric current value of a cyclic voltammogram obtained by means of the cyclic voltammetry method, under the conditions of a sweep range being ±0.3 V vs Pt, a sweep rate being 500 mV/sec, an electrolytic solution at 30°C, Pt as a reference electrode, stainless steel as a counter electrode, and the electrode material as a working electrode, is 6.5 times or more of the maximum value of an electric current value of a cyclic voltammogram under the same conditions except for using the smooth base material as a working electrode.

### [Configuration 9]

Electrode material according to any one of configurations 1 to 8, wherein a mixed layer in which substances constituting the first conductive layer and substances constituting the second conductive layer are present in a mixed state is formed between the first conductive layer and the second conductive layer, and wherein components of the mixed layer are constituted so as to change from components substantially containing only substances constituting the first conductive layer to components substantially containing only substances constituting the second conductive layer, upon heading from the first conductive layer towards the second conductive layer.

### [Configuration 10]

Electrode material according to configuration 8, wherein a mixed layer in which substances constituting the first conductive layer and substances constituting the second conductive layer are present in a mixed state is formed between the first conductive layer and the second conductive layer, and wherein components of the mixed layer are constituted so as to change from components substantially containing only substances constituting the first conductive layer to components substantially containing only substances constituting the second conductive layer, upon heading from the first conductive layer towards the second conductive layer, and wherein,
when the amount of each C bond state present is analyzed by means of XPS (X-ray photoelectron spectroscopy) with respect to the depth direction from the surface layer of the second conductive layer, the ratio of the amount of present bonds between metal elemental atoms and carbon atoms constituting the first conductive layer is 5% or more, with respect to the total amount of said each C bond state present by means of the C1s spectrum.

### [Configuration 11]

Electrode material according to configuration 10, wherein for a half width of a G band peak obtained by peak separation in a Raman spectrum by means of Raman spectroscopy, the half width of carbon contained in the second conductive layer is 3.8 times or more with respect to the half width of graphite crystals.

### [Configuration 12]

Electrode material according to configuration 11, wherein substances constituting the first conductive layer and substances constituting the second conductive layer differ from each other.

### [Configuration 13]

Electrode material according to configuration 11 or 12, wherein a BET specific surface area obtained using krypton (Kr) as an adsorption gas is 1.5 times or more of said BET specific surface area of the smooth base material.

### [Configuration 14]

Electrode material according to configuration 13, wherein the mean diameter of a projecting part of an uneven portion on the surface layer side of the inorganic conductive layer is 210 nm or less.

### [Configuration 15]

Electrode material according to any one of configurations 1 to 14, wherein the carbon is a graphite-like carbon.

### [Configuration 16]

Electrode material according to any one of configurations 1 to 15, wherein a static friction coefficient and a dynamic friction coefficient of a surface on a surface layer side of the electrode material with respect to a separator paper are respectively higher than a static friction coefficient and a dynamic friction coefficient, with respect to a separator paper, of a surface on a surface layer side of an electrode material comprising a conductive layer consisting of carbon, which is the outermost layer on the surface layer side, and comprising no uneven portion on the surface layer side.

### [Configuration 17]

Cathode foil for an electrolytic capacitor wherein at least a solid electrolyte is interposed between an anode foil and a cathode foil, the cathode foil using the electrode material according to any one of configurations 1 to 16.

### [Configuration 18]

Electrolytic capacitor wherein at least a solid electrolyte is interposed between an anode foil and a cathode foil, the electrolytic capacitor having the cathode foil according to configuration 17.

### [Configuration 19]

Electrolytic capacitor according to configuration 18, wherein an electrolytic solution is further interposed between the anode foil and the cathode foil.

### Industrial Applicability

The electrode material of the present invention can be utilized as a cathode foil of an electrolytic capacitor such as a hybrid capacitor, solid electrolytic capacitor and the like. The electrode material of the present invention can be further used in a variety of capacitors, as well as in a variety of electrical storage devices such as electric double layer capacitor, lithium ion capacitor, lithium ion battery, and in a variety of electric generating elements such as a fuel cell battery, a solar battery, a thermoelectric generating element and vibration electric generating element.

### Reference Signs List

- 1: Cathode foil (electrode material)
- 2: Base material
- 3: Oxide layer
- 4: First conductive layer
- 5: Second conductive layer
- 6: Dense layer
- 7: Mixed layer
- 8: Winding type solid electrolytic capacitor, winding type hybrid capacitor
- 9: Anode foil
- 10: Cathode foil
- 11: Separator paper
- 12: Capacitor element
- 13: Anode terminal
- 14: Cathode terminal
- 15: Aluminum case
- 16: Sealing rubber

## Claims

1. Electrode material, comprising:
an oxide layer on a smooth base material; and
further comprising an inorganic conductive layer on the oxide layer,
wherein the inorganic conductive layer comprises a first conductive layer containing a metal and/or a metal compound, and a second conductive layer containing carbon,
wherein the first conductive layer comprises an uneven portion on the surface layer side thereof, and
wherein the second conductive layer is positioned at the outermost layer of the inorganic conductive layer.

2. Electrode material according to claim 1, wherein the smooth base material and the first conductive layer are constituted from substances which differ from each other.

3. Electrode material according to claim 1 or 2, wherein the second conductive layer consists substantially of carbon.

4. Electrode material according to claim 1 or 2, wherein the inorganic conductive layer further comprises a dense layer in which the metal and/or the metal compound is densely present, and the dense layer is formed between the oxide layer and the first conductive layer.

5. Electrode material according to claim 1 or 2, wherein in the inorganic conductive layer, both the first conductive layer and the second conductive layer, or at least the first conductive layer consists of a particle deposition layer, and wherein the first conductive layer contains at least one kind of titanium, aluminum, a nitride thereof, an oxide thereof, an oxynitride thereof, a carbide thereof, and a carbonitride thereof.

6. Electrode material according to claim 1 or 2, wherein the oxide layer is a phosphorous-containing oxide layer.

7. Electrode material according to claim 1 or 2, wherein the smooth base material contains aluminum or an aluminum alloy.

8. Electrode material according to claim 1, wherein a maximum value of an electric current value of a cyclic voltammogram obtained by means of the cyclic voltammetry method, under the conditions of a sweep range being ±0.3 V vs Pt, a sweep rate being 500 mV/sec, an electrolytic solution at 30°C, Pt as a reference electrode, stainless steel as a counter electrode, and the electrode material as a working electrode, is 6.5 times or more of the maximum value of an electric current value of a cyclic voltammogram under the same conditions except for using the smooth base material as a working electrode.

9. Electrode material according to claim 1 or 2, wherein a mixed layer in which substances constituting the first conductive layer and substances constituting the second conductive layer are present in a mixed state is formed between the first conductive layer and the second conductive layer, and wherein components of the mixed layer are constituted so as to change from components substantially containing only substances constituting the first conductive layer to components substantially containing only substances constituting the second conductive layer, upon heading from the first conductive layer towards the second conductive layer.

10. Electrode material according to claim 8, wherein a mixed layer in which substances constituting the first conductive layer and substances constituting the second conductive layer are present in a mixed state is formed between the first conductive layer and the second conductive layer, and wherein components of the mixed layer are constituted so as to change from components substantially containing only substances constituting the first conductive layer to components substantially containing only substances constituting the second conductive layer, upon heading from the first conductive layer towards the second conductive layer, and wherein,
when the amount of each C bond state present is analyzed by means of XPS (X-ray photoelectron spectroscopy) with respect to the depth direction from the surface layer of the second conductive layer, the ratio of the amount of present bonds between metal elemental atoms and carbon atoms constituting the first conductive layer is 5% or more, with respect to the total amount of said each C bond state present by means of the C1s spectrum.

11. Electrode material according to claim 10, wherein for a half width of a G band peak obtained by peak separation in a Raman spectrum by means of Raman spectroscopy, the half width of carbon contained in the second conductive layer is 3.8 times or more with respect to the half width of graphite crystals.

12. Electrode material according to claim 11, wherein substances constituting the first conductive layer and substances constituting the second conductive layer differ from each other.

13. Electrode material according to claim 11 or 12, wherein a BET specific surface area obtained using krypton (Kr) as an adsorption gas is 1.5 times or more of said BET specific surface area of the smooth base material.

14. Electrode material according to claim 13, wherein the mean diameter of a projecting part of an uneven portion on the surface layer side of the inorganic conductive layer is 210 nm or less.

15. Electrode material according to claim 1 or 2, wherein the carbon is a graphite-like carbon.

16. Electrode material according to claim 1 or 2, wherein a static friction coefficient and a dynamic friction coefficient of a surface on a surface layer side of the electrode material with respect to a separator paper are respectively higher than a static friction coefficient and a dynamic friction coefficient, with respect to a separator pater, of a surface on a surface layer side of an electrode material comprising a conductive layer consisting of carbon, which is the outermost layer on the surface layer side, and comprising no uneven portion on the surface layer side.

17. Cathode foil for an electrolytic capacitor wherein at least a solid electrolyte is interposed between an anode foil and a cathode foil, the cathode foil using the electrode material according to claim 1 or 2.

18. Electrolytic capacitor wherein at least a solid electrolyte is interposed between an anode foil and a cathode foil, the electrolytic capacitor having the cathode foil according to claim 17.

19. Electrolytic capacitor according to claim 18, wherein an electrolytic solution is further interposed between the anode foil and the cathode foil.
